# EUROPEAN PATENT SPECIFICATION

(11) **EP 4 446 026 B1**
(45) Date of publication and mention of the grant of the patent: **04.02.2026**
(21) Application number: 22920434.2
(22) Date of filing: 08.11.2022
(51) Int. Cl.: B21D 22/00, B21D 22/20, G01B 11/24, G06F 30/10, G06F 30/20, G06F 30/23, G06F 113/22, G06F 113/24, B21D 22/02

(54) **PRESS-FORMING ANALYSIS METHOD, PRESS-FORMING ANALYSIS DEVICE, AND PRESS-FORMING ANALYSIS PROGRAM**
PRESSFORMUNGSANALYSEVERFAHREN, PRESSFORMUNGSANALYSEVORRICHTUNG UND PRESSFORMUNGSANALYSEPROGRAMM
PROCÉDÉ D'ANALYSE DE FORMAGE À LA PRESSE, DISPOSITIF D'ANALYSE DE FORMAGE À LA PRESSE ET PROGRAMME D'ANALYSE DE FORMAGE À LA PRESSE

(30) Priority: 14.01.2022 JP 2022004081; 16.02.2022 JP 2022021760
(43) Date of publication of application: 16.10.2024
(73) Proprietor: JFE Steel Corporation, Tokyo 100-0011 (JP)
(72) Inventor: OGAWA, Takeshi, Tokyo 100-0011 (JP); SUMIKAWA, Satoshi, Tokyo 100-0011 (JP); SHINMIYA, Toyohisa, Tokyo 100-0011 (JP); YAMASAKI, Yuji, Tokyo 100-0011 (JP)
(74) Representative: Hoffmann Eitle
(86) International application number: PCT/JP2022/041518
(87) International publication number: WO 2023/135913

(56) References cited:
- EP-A1- 3 919 197
- WO-A1-2017/170533
- WO-A1-2019/167793
- JP-A- 2014 046 336
- JP-A- 2021 126 683
- JP-B2- 4 052 211
- US-A1- 2013 041 634
- "Press Forming Analysis Contributing to the Expansion of High Strength Steel Sheet Applications", vol. 18, 1 March 2013, article AKINOBU ISHIWATARI ET AL: "Press Forming Analysis Contributing to the Expansion of High Strength Steel Sheet Applications", pages: 96 - 102, XP055235424
- YOSHIDA TOHRU ET AL: "Shape Control Techniques for High Strength Steel in Sheet Metal Forming", 1 July 2003 (2003-07-01), pages 1 - 6, XP093235257, Retrieved from the Internet <URL:https://www.nipponsteel.com/en/tech/report/nsc/pdf/n8807.pdf> [retrieved on 20250214]

## Description

### Field

The present invention relates to a press forming analysis method, a press forming analysis apparatus, and a press forming analysis program for predicting an effect of shape variation of a blank when press forming is performed using the blank collected from a metal sheet having the shape variation.

### Background

Amid the improving collision safety of an automotive body due to tightening of collision safety standards for automobiles, weight reduction of an automotive body has also been required for improvement of fuel efficiency of an automobile in response to recent carbon dioxide emission regulations. In order to provide both the collision safety performance and the weight reduction of an automotive body, a metal sheet having strength higher than that in the conventional case is being adopted in the automotive body.

Conventionally, an actual metal sheet from which a blank for obtaining a press-formed part is collected is not completely flat but has a waveform (shape variation). Therefore, the actual blank collected from such a metal sheet is not also necessarily flat and may have shape variation.

When a metal sheet having such a waveform is used as a blank and press-formed into an automotive part, there is a concern that the shape variation of the press-formed part obtained after press forming would have an effect on dimensional accuracy, resulting in deviation from the target dimensional accuracy.

For example, Patent Literature 1 and Patent Literature 2 are disclosed as techniques for screening a press-formed part after press forming, which has a dimensional accuracy deviating from a target dimensional accuracy.

### Citation List

### Patent Literature

Patent Literature 1: JP S62-047504 A
Patent Literature 2: JP 2019-002834 A
Patent Literature 3: EP 3 919 197 A1

### Summary

### Technical Problem

The technique disclosed in Patent Literature 1 or Patent Literature 2 compares the shapes of formed parts after press forming and cannot predict the effect of shape variation of a blank before press forming on a press-formed part after press forming. Conventionally, the effect of shape variation of a blank on the shape of a press-formed part has not been predicted, and identification has not been made regarding which portion of the press-formed part is susceptible to the shape variation of the blank.

A blank used for press forming is collected from a metal sheet such as a steel sheet by punching or shearing. Since the position at the time of collection from a metal sheet having shape variation is different, even in the case of a blank collected from the same metal sheet, portions exhibiting unevenness are different among the individual blanks. Therefore, consideration needs to be given to the difference in the shape variation of individual blanks in predicting the effect of the shape variation of the blank on the shape of the press-formed part.

The present invention has been made to solve the above problems, and an object of the present invention is to provide a press forming analysis method, a press forming analysis apparatus, and a press forming analysis program for predicting an effect of shape variation of a blank when press forming is performed using the blank collected from a metal sheet having shape variation.

### Solution to Problem

To solve the problem and achieve the object, a press forming analysis method according to the first aspect of the present invention is the press forming analysis method for predicting an effect of shape variation of a blank when press forming is performed using the blank collected from a metal sheet having the shape variation., the press forming analysis method includes: a shape acquisition step of a standard press-formed part of performing press forming analysis where press forming is performed with a predetermined tool of press forming model using a flat blank model that has a flat shape, and acquiring a shape of a press-formed part after die release as a shape of the standard press-formed part; a generation step of a waveform blank model of generating a waveform blank model having a waveform that has a predetermined wavelength and a predetermined amplitude corresponding to the shape variation; a shape acquisition step of a press-formed part using the waveform blank model of performing press forming analysis where press forming is performed with the predetermined tool of press forming model using the waveform blank model, and acquiring a shape of the press-formed part after die release as a shape of a waveform blank press-formed part; a first deviation amount acquisition step of comparing the shape of the standard press-formed part and the shape of the waveform blank press-formed part, and obtaining a portion where both the shapes are deviated from each other and a deviation amount of shape change; a generation step of a cycle deviation waveform blank model of generating one or more types of cycle deviation waveform blank models each having a waveform that has an amplitude identical to and a cycle deviated from the waveform in the waveform blank model; a shape acquisition step of a press-formed part using the cycle deviation waveform blank model of performing press forming analysis where press forming is performed with the predetermined tool of press forming model using the cycle deviation waveform blank model, and acquiring a shape of the press-formed part after die release as a shape of a cycle deviation waveform blank press-formed part; a second deviation amount acquisition step of comparing the shape of the standard press-formed part with one or more types of the shape of the cycle deviation waveform blank press-formed part, and obtaining a portion where both the shapes are deviated from each other and a deviation amount of shape change; and a step to identify portions requiring countermeasures of identifying, as a portion requiring countermeasures, a portion having a deviation amount of shape change exceeding a threshold among the deviation amounts of shape change obtained in the first deviation amount acquisition step and the second deviation amount acquisition step.

Moreover, the first deviation amount acquisition step may acquire, as the deviation amount of shape change, a difference between: a springback amount of a predetermined portion in the shape of the standard press-formed part; and a springback amount of the same portion in the shape of the waveform blank press-formed part as the predetermined portion in the shape of the standard press-formed part, and the second deviation amount acquisition step may acquire, as the deviation amount of shape change, a difference between: the springback amount of the predetermined portion in the shape of the standard press-formed part; and a springback amount of the same portion in the shape of the cycle deviation waveform blank press-formed part as the predetermined portion in the shape of the standard press-formed part.

Moreover, a press forming analysis method according to the second aspect of the present invention is the press forming analysis method for predicting an effect of shape variation of a blank when press forming is performed using the blank collected from a metal sheet having the shape variation. The press forming analysis method includes: a shape acquisition step of a standard press-formed part of performing press forming analysis where press forming is performed with a predetermined tool of press forming model using a flat blank model that has a flat shape, and acquiring a shape of a press-formed part after die release as a shape of the standard press-formed part; a first generation step of a first actual blank model of generating the first actual blank model on a basis of a measurement result obtained by measuring a shape of a first actual blank collected from a predetermined position of the metal sheet; a first shape acquisition step of a press-formed part using the first actual blank model of performing press forming analysis where press forming is performed with the predetermined tool of press forming model using the first actual blank model, and acquiring a shape of the press-formed part after die release as a first shape of an actual blank press-formed part; a first actual deviation amount acquisition step of comparing the shape of the standard press-formed part and the first shape of the actual blank press-formed part, and obtaining a portion where both the shapes are deviated from each other and a deviation amount of shape change; a second generation step of a second actual blank model of generating one or more types of second actual blank models on a basis of a measurement result obtained by measuring a shape or shapes of one or more of second actual blanks collected from a position of the metal sheet, the position being different from a position from which the first actual blank is collected; a second shape acquisition step of a press-formed part using the one or more types of second actual blank models of performing press forming analysis where press forming is performed with the predetermined tool of press forming model using the one or more types of second actual blank models, and acquiring a shape of the press-formed part after die release as a second shape of an actual blank press-formed part; a second actual deviation amount acquisition step of comparing the shape of the standard press-formed part with one or more types of the second shape of the actual blank press-formed part, and obtaining a portion where both the shapes are deviated from each other and a deviation amount of shape change; and a step to identify portions requiring countermeasures of identifying, as a portion requiring countermeasures, a portion having a deviation amount of shape change exceeding a threshold among the deviation amounts of shape change obtained in the first actual deviation amount acquisition step and the second actual deviation amount acquisition step.

Moreover, the first actual deviation amount acquisition step may acquire, as the deviation amount of shape change, a difference between: a springback amount of a predetermined portion in the shape of the standard press-formed part; and a springback amount of the same portion in the first shape of the actual blank press-formed part as the predetermined portion in the shape of the standard press-formed part, and the second actual deviation amount acquisition step may acquire, as the deviation amount of shape change, a difference between: the springback amount of the predetermined portion in the shape of the standard press-formed part; and a springback amount of the same portion in the second shape of the actual blank press-formed part as the predetermined portion in the shape of the standard press-formed part.

Moreover, a press forming analysis apparatus according to the first aspect of the present invention is the press forming analysis apparatus for predicting an effect of shape variation of a blank when press forming is performed using the blank collected from a metal sheet having the shape variation. The press forming analysis apparatus includes: a shape acquisition unit of a standard press-formed part, the shape acquisition unit being configured to perform press forming analysis where press forming is performed with a predetermined tool of press forming model using a flat blank model that has a flat shape, and acquire a shape of a press-formed part after die release as a shape of the standard press-formed part; a generation unit of a waveform blank model, the generation unit being configured to generate a waveform blank model having a waveform that has a predetermined wavelength and a predetermined amplitude corresponding to the shape variation; a shape acquisition unit of a press-formed part using the waveform blank model, the shape acquisition unit being configured to perform press forming analysis where press forming is performed with the predetermined tool of press forming model using the waveform blank model, and acquire a shape of the press-formed part after die release as a shape of a waveform blank press-formed part; a first deviation amount acquisition unit being configured to compare the shape of the standard press-formed part and the shape of the waveform blank press-formed part, and obtain a portion where both the shapes are deviated from each other and a deviation amount of shape change; a generation unit of a cycle deviation waveform blank model, the generation unit being configured to generate one or more types of cycle deviation waveform blank models each having a waveform that has an amplitude identical to and a cycle deviated from the waveform in the waveform blank model; a shape acquisition unit of a press-formed part using the cycle deviation waveform blank model, the shape acquisition unit being configured to perform press forming analysis where press forming is performed with the predetermined tool of press forming model using the cycle deviation waveform blank model, and acquire a shape of the press-formed part after die release as a shape of a cycle deviation waveform blank press-formed part; a second deviation amount acquisition unit being configured to compare the shape of the standard press-formed part with one or more types of the shape of the cycle deviation waveform blank press-formed part, and obtain a portion where both the shapes are deviated from each other and a deviation amount of shape change; and a unit to identify portions requiring countermeasures, the unit being configured to identify, as a portion requiring countermeasures, a portion having a deviation amount of shape change exceeding a threshold among the deviation amounts of shape change obtained in the first deviation amount acquisition unit and the second deviation amount acquisition unit.

Moreover, the first deviation amount acquisition unit may acquire, as the deviation amount of shape change, a difference between: a springback amount of a predetermined portion in the shape of the standard press-formed part; and a springback amount of the same portion in the shape of the waveform blank press-formed part as the predetermined portion in the shape of the standard press-formed part, and the second deviation amount acquisition unit may acquire, as the deviation amount of shape change, a difference between: the springback amount of the predetermined portion in the shape of the standard press-formed part; and a springback amount of the same portion in the shape of the cycle deviation waveform blank press-formed part as the predetermined portion in the shape of the standard press-formed part.

Moreover, a press forming analysis apparatus according to the second aspect of the present invention is the press forming analysis apparatus for predicting an effect of shape variation of a blank when press forming is performed using the blank collected from a metal sheet having the shape variation. The press forming analysis apparatus includes: a shape acquisition unit of a standard press-formed part, the shape acquisition unit being configured to perform press forming analysis where press forming is performed with a predetermined tool of press forming model using a flat blank model that has a flat shape, and acquire a shape of a press-formed part after die release as a shape of the standard press-formed part; a first generation unit of an actual blank model, the first generation unit being configured to measure a shape of a first actual blank collected from a predetermined position of the metal sheet, and generate a first actual blank model on a basis of a measurement result; a first shape acquisition unit of a press-formed part using the first actual blank model, the shape acquisition unit being configured to perform press forming analysis where press forming is performed with the predetermined tool of press forming model using the first actual blank model, and acquire a shape of the press-formed part after die release as a first shape of an actual blank press-formed part; a first actual deviation amount acquisition unit configured to compare the shape of the standard press-formed part and the first shape of the actual blank press-formed part, and obtain a portion where both the shapes are deviated from each other and a deviation amount of shape change; a second generation unit of an actual blank model, the second generation unit being configured to measure a shape or shapes of one or more second actual blanks collected from a position of the metal sheet, the position being different from a position from which the first actual blank is collected, and generate one or more types of second actual blank models on a basis of a measurement result; a second shape acquisition unit of a press-formed part using an actual blank, the shape acquisition unit being configured to perform press forming analysis when press forming is performed with the predetermined tool of press forming model using the one or more types of second actual blank models, the shape acquisition unit being configured to acquire a shape of the press-formed part after die release as a shape of the press-formed part using the one or more second actual blanks; a second actual deviation amount acquisition unit being configured to compare the shape of the standard press-formed part with one or more types of the second shape of the actual blank press-formed part, and obtain a portion where both the shapes are deviated from each other and a deviation amount of shape change; and a unit to identify portions requiring countermeasures, the unit being configured to identify, as a portion requiring countermeasures, a portion having a deviation amount of shape change exceeding a threshold among the deviation amounts of shape change obtained in the first actual deviation amount acquisition unit and the second actual deviation amount acquisition unit.

Moreover, the first actual deviation amount acquisition unit may acquire, as the deviation amount of shape change, a difference between: a springback amount of a predetermined portion in the shape of the standard press-formed part; and a springback amount of the same portion in the first shape of the actual blank press-formed part as the predetermined portion in the shape of the standard press-formed part, and the second actual deviation amount acquisition unit may acquire, as the deviation amount of shape change, a difference between: the springback amount of the predetermined portion in the shape of the standard press-formed part; and a springback amount of the same portion in the second shape of the actual blank press-formed part as the predetermined portion in the shape of the standard press-formed part.

Moreover, a press forming analysis program according to the present invention is the press forming analysis program causing a computer to function as the press forming analysis apparatus according to the present invention.

### Advantageous Effects of Invention

According to the present invention, it is possible to know a portion where the shape variation of a blank has a large effect on the shape of a press-formed part after springback and a deviation amount of shape change attributable to the shape variation of the blank in consideration of the difference in the shape variation of individual blanks. Whether a press-formed part is defective is determined on the basis of the deviation amount of shape change and a predetermined threshold, whereby whether a blank is defective can be predicted. As a result, it is possible to grasp the limit of the shape accuracy of a blank that falls within the range of the shape accuracy required for a press-formed part and to stably perform press forming that generates a favorable shape by screening a blank having an appropriate shape. In addition, when a shape defect of the press-formed part occurs, it is possible to identify which portion of the blank before press forming is causative of the shape defect, and countermeasures therefor can be taken promptly, leading also to improvement of productivity.

### Brief Description of Drawings

FIG. 1 is an explanatory diagram of each step of a press forming analysis method according to a first embodiment.
FIG. 2 is an external view of a part focused on in the first embodiment.
FIG. 3 is an explanatory view of a flat blank model used in the first embodiment.
FIG. 4 is an explanatory view of a shape of a standard press-formed part subjected to press forming analysis using the flat blank model of FIG. 3 (FIG. 4(a)) and a view illustrating an amount of shape change in FIG. 4(a) in correspondence with the flat blank model (FIG. 4(b)).
FIG. 5 is an explanatory view of a waveform blank model having a cyclic waveform.
FIG. 6 is an explanatory view of a shape of a waveform blank press-formed part subjected to press forming analysis using the waveform blank model of FIG. 5 (FIG. 6(a)) and a view illustrating an amount of shape change in FIG. 6(a) in correspondence with the flat blank model (FIG. 6(b)).
FIG. 7 is a view for explaining a deviation amount of shape change when the shape of a standard press-formed part in FIG. 4 is compared with the shape of a waveform blank press-formed part in FIG. 6.
FIG. 8 is an explanatory view of a cycle deviation waveform blank model having a waveform that has an amplitude identical to and a cycle deviated from the waveform of the waveform blank model of FIG. 5.
FIG. 9 is an explanatory view of a shape of a cycle deviation waveform blank press-formed part subjected to press forming analysis using the cycle deviation waveform blank model of FIG. 8 (FIG. 9(a)) and a view illustrating an amount of shape change in FIG. 9(a) in correspondence with the flat blank model (FIG. 9(b)).
FIG. 10 is a view for explaining a deviation amount of shape change when the shape of a standard press-formed part in FIG. 4 is compared with the shape of a cycle deviation waveform blank press-formed part in FIG. 9.
FIG. 11 is a view illustrating the range of the deviation amount of shape change in FIGS. 7 and 10 in correspondence with the flat blank model.
FIG. 12 is an explanatory diagram of another aspect of the press forming analysis method according to the first embodiment.
FIG. 13 is an explanatory diagram of a press forming analysis apparatus according to a second embodiment.
FIG. 14 is an explanatory diagram of another aspect of the press forming analysis apparatus according to the second embodiment.
FIG. 15 is an explanatory view of a cycle deviation waveform blank model according to an example.
FIG. 16 is an explanatory view of a shape of a cycle deviation waveform blank press-formed part subjected to press forming analysis using the cycle deviation waveform blank model of FIG. 15 (FIG. 16(a)) and FIG. 16(b) which is a view illustrating an amount of shape change in FIG. 16(a) in correspondence with the flat blank model .
FIG. 17 is a view for explaining a deviation amount of shape change when the shape of a standard press-formed part in FIG. 4 is compared with the shape of a cycle deviation waveform blank press-formed part in FIG. 16.
FIG. 18 is a view illustrating the range of the deviation amount of shape change in FIGS. 7 and 17 in correspondence with the flat blank model.

### Description of Embodiments

### [First Embodiment]

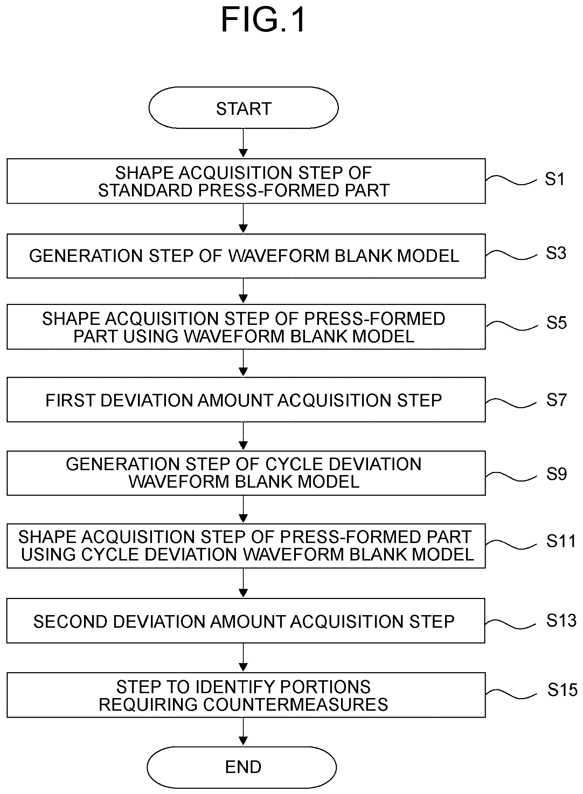

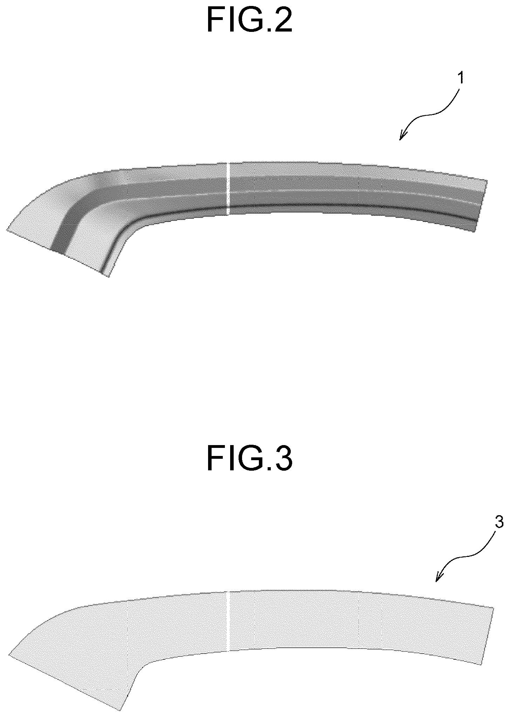

A press forming analysis method according to the present embodiment is a press forming analysis method for predicting an effect of shape variation (unevenness) of a blank when press forming (crash forming, deep drawing, or the like) is performed using the blank collected from a metal sheet having shape variation. As illustrated in FIG. 1, the press forming analysis method according to the present embodiment includes a shape acquisition step S1 of a standard press-formed part, a generation step S3 of a waveform blank model, a shape acquisition step S5 of a press-formed part using a waveform blank model, a first deviation amount acquisition step S7, a generation step S9 of a cycle deviation waveform blank model, a shape acquisition step S11 of a press-formed part using a cycle deviation waveform blank model, a second deviation amount acquisition step S13, and a step S15 to identify portions requiring countermeasures. Hereinafter, each configuration will be described in detail by exemplifying a case where press forming is performed assuming that a press-formed part 1 illustrated in FIG. 2 is a target shape. In the present embodiment, a blank model of a 1.5 G-Pa class steel sheet having a sheet thickness of 1.2 mm is used, but the present invention is not limited thereto.

### <Shape Acquisition Step of Standard Press-Formed Part>

The shape acquisition step S1 of a standard press-formed part is a step of performing press forming analysis with a predetermined tool of press forming model using a flat blank model (hereinafter, referred to as a "flat blank model 3") as illustrated in FIG. 3, and of acquiring a press-formed part shape after die release as a shape of a standard press-formed part. The "press forming analysis" in the present description includes an analysis for acquiring the shape of a bottom dead center and an analysis for acquiring the shape after die release, that is, after springback (the same applies hereinafter).

The flat blank model 3 is a blank model conventionally and generally used in press forming analysis and has a flat shape without unevenness.

As the press forming analysis, computer aided engineering (CAE) analysis such as a finite element method (FEM) is commonly adopted. The forming by CAE analysis may be crash forming or deep drawing, but in the present embodiment, the case of crash forming will be described as an example.

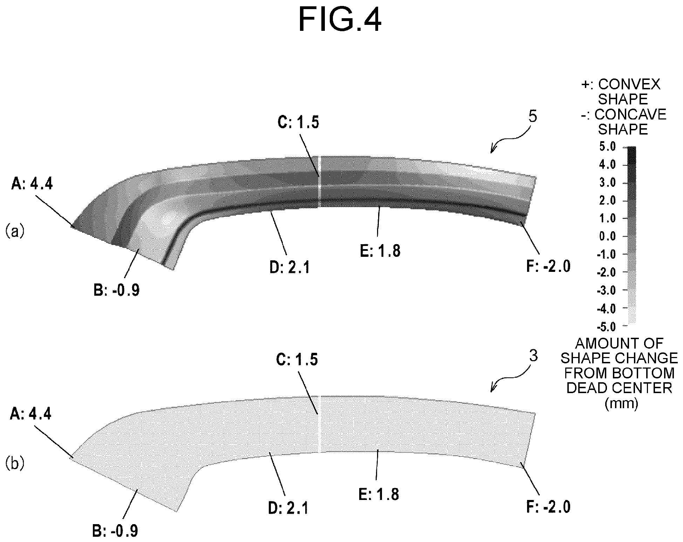

FIG. 4(a) illustrates a shape 5 of the standard press-formed part after die release by press forming analysis. FIG. 4(a) illustrates not only the shape but also the amount of shape change from the bottom dead center using shade of color. The amount of shape change is a value obtained by subtracting the height of the corresponding portion of the shape of the bottom dead center from the height of each portion of the shape of the press-formed part after die release and springback following press forming in the press forming direction, and corresponds to the springback amount in the press forming direction. When the height difference (amount of shape change) is + (positive), the shape is convex with respect to the bottom dead center shape, and when the height difference (amount of shape change) is - (negative), the shape is concave with respect to the bottom dead center shape. In FIG. 4(a), the color of the portion being concave with respect to the bottom dead center is made lighter, and the color of the portion being convex with respect to the bottom dead center is made darker. The number displayed in the drawing indicates an amount of shape change in millimeters; a positive number indicates a change in the convex direction, and a negative number indicates a change in the concave direction.

In the present example, as illustrated in FIG. 4(a), the amounts of shape change were 4.4 mm at the left end portion (portion A) of the shape 5 of the standard press-formed part, -0.9 mm at the left end of the top sheet portion (portion B), 1.5 mm at the center portion in the longitudinal direction (portion C), 1.8 to 2.1 mm at the bottom portion (portions D and E), and -2.0 mm at the right end portion (portion F). In order to indicate the correspondence relationship between the blank shape before press forming and the amount of shape change after springback, FIG. 4(b) illustrates the amounts of shape change at the portions A to F in correspondence with the flat blank model 3.

### <Generation Step of Waveform Blank Model>

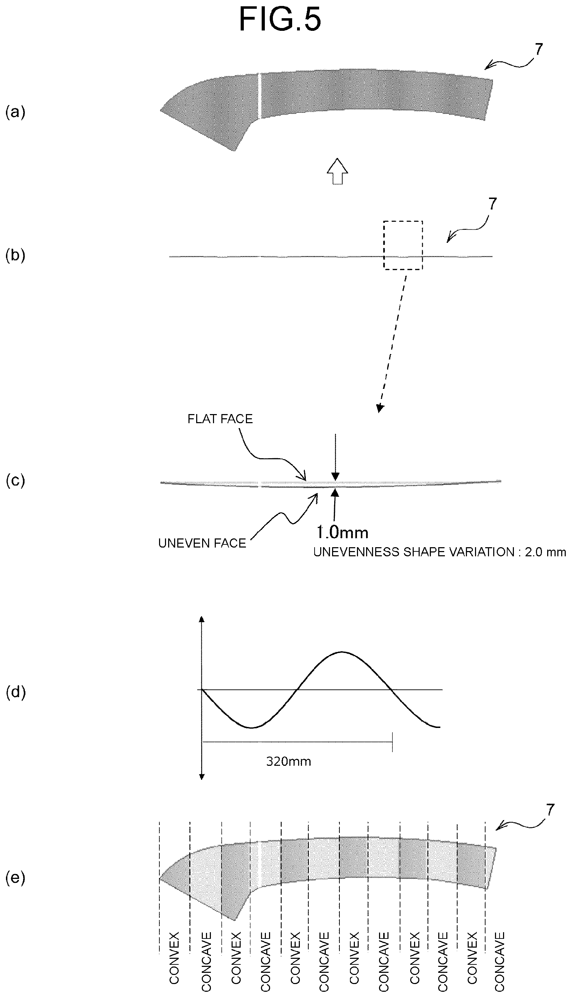

The generation step S3 of a waveform blank model is a step of generating a waveform blank model 7 (see FIG. 5(a)) having a shape corresponding to shape variation of a metal sheet, for example, a waveform resulting from unevenness. A specific shape will be described below.

The example illustrated in FIG. 5(a) is a blank model having a waveform with a predetermined wavelength and a predetermined amplitude. The shade in FIG. 5(a) represents unevenness; a dark-shaded portion has a convex shape protruding toward the front of the paper, and a light-shaded portion has a concave shape recessed toward the back of the paper. FIG. 5(b) illustrates a state of the blank model in FIG. 5(a) viewed from a direction of an open arrow, and FIG. 5(c) is a partially enlarged view of FIG. 5(b). In the example illustrated in FIG. 5, the sheet thickness is 1.2 mm, the amplitude of the unevenness of the shape is 2.0 mm (±1.0 mm), and the wavelength of the unevenness (see FIG. 5(d)) is 320 mm. The start position and the end position of the unevenness set in the blank are not necessarily blank edges. FIG. 5(e) emphasizes portions having unevenness of the shape of FIG. 5(a).

The waveform blank model 7 to be generated in the generation step S3 of a waveform blank model may be generated by measuring the shape of the actual blank collected from the predetermined position of the metal sheet having shape variation with the use of, for example, a laser rangefinder-based 3D shape measuring instrument, and being based on the measurement result (e.g., by using a representative wavelength and amplitude for setting).

### <Shape Acquisition Step of Press-Formed Part Using Waveform Blank Model>

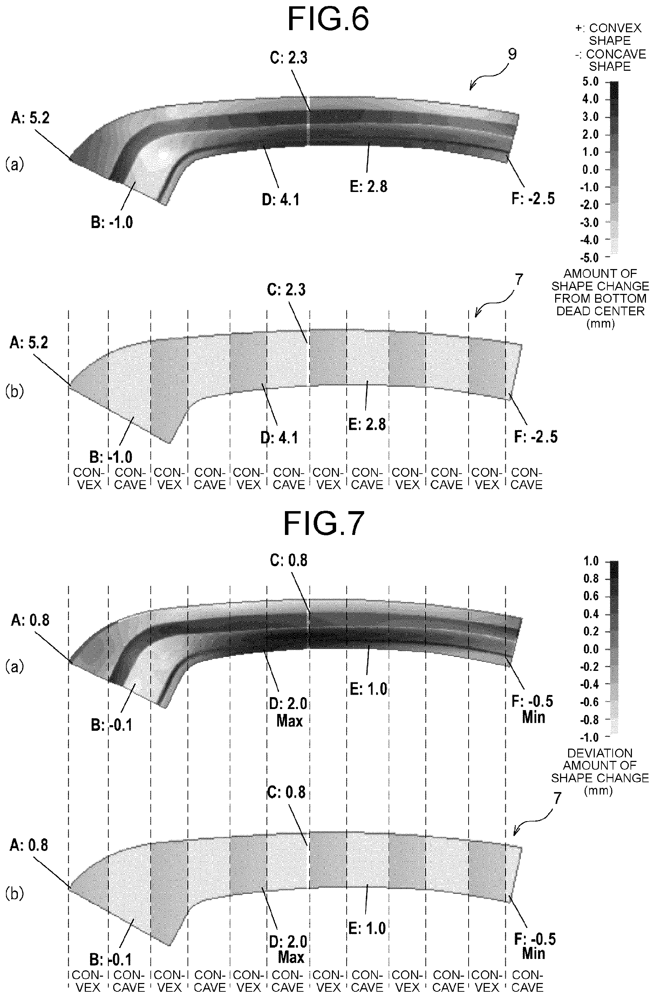

The shape acquisition step S5 of a press-formed part using a waveform blank model is a step of performing press forming analysis where press forming is performed using the waveform blank model 7 with the same predetermined tool of press forming model as that in the shape acquisition step S1 of a standard press-formed part, and of acquiring the shape of the press-formed part after die release as a shape of a waveform blank press-formed part. A shape 9 of the waveform blank press-formed part is illustrated in FIG. 6(a). The colors and numerical values presented in FIG. 6(a) are the same as those in FIG. 4(a).

In the present example, as illustrated in FIG. 6(a), the amounts of shape change were 5.2 mm at the left end portion (portion A) of the shape 9 of the waveform blank press-formed part, -1.0 mm at the left end of the top sheet portion (portion B), 2.3 mm at the center portion in the longitudinal direction (portion C), 2.8 to 4.1 mm at the bottom portion (portions D and E), and -2.5 mm at the right end portion (portion F). FIG. 6(b) illustrates the amounts of shape change at the portions A to F in the shape 9 of the waveform blank press-formed part in correspondence with the waveform blank model 7 before press forming analysis (FIG. 5(e)).

### <First Deviation Amount Acquisition Step>

The first deviation amount acquisition step S7 is a step of comparing the shape 5 of the standard press-formed part (FIG. 4(a)) and the shape 9 of the waveform blank press-formed part (FIG. 6(a)) and obtaining a portion where both the shapes are deviated from each other and a deviation amount of shape change.

In the present embodiment, the shape of the press-formed part at the bottom dead center is defined as a reference shape, and the amount of shape change (springback amount) from the reference shape at each portion of the press-formed part obtained by CAE analysis is obtained. Then, the amount of shape change between the flat blank and the blank having shape variation are compared, and the difference in the amount of shape change due to the shape variation of the blank is obtained as a deviation amount of shape change. That is, the deviation amount of shape change obtained in the first deviation amount acquisition step S7 is a value obtained by subtracting the amount of shape change of the shape 5 of the standard press-formed part using a flat blank (FIG. 4) from the amount of shape change of the shape 9 of the waveform blank press-formed part using the blank having shape variation (FIG. 6). Therefore, when the difference in the amount of shape change (deviation amount of shape change) is + (positive), the portion of the shape 9 of the waveform blank press-formed part has a convex shape as compared with the shape 5 of the standard press-formed part; whereas, when the difference in the amount of shape change (deviation amount of shape change) is - (negative), the portion of the shape 9 of the waveform blank press-formed part has a concave shape as compared with the shape 5 of the standard press-formed part.

FIGS. 7(a) and 7(b) illustrate the deviation amount of shape change obtained as described above and the unevenness shape of the waveform blank model 7 in correspondence with each other. In the drawing, Max represents the maximum value of the convex shape, and Min represents the maximum value (minimum in terms of numerical value) of the concave shape. As illustrated in FIG. 7(a), the deviation amount of shape change in the case of using the waveform blank model 7 was 0.8 mm at the portion A, -0.1 mm at the portion B, 0.8 mm at the portion C, 2.0 mm at the portion D, 1.0 mm at the portion E, and -0.5 mm at the portion F.

In comparison with FIG. 7(a) and FIG. 7(b), the portion D most greatly deviated in the convex direction is considered to be affected by the convex shape of the corresponding portion of the waveform blank model 7. Similarly, the portion F most greatly deviated in the concave direction is considered to be affected by the concave shape of the corresponding portion of the waveform blank model 7.

For the shape 9 of the waveform blank press-formed part for which the deviation amount of shape change has been obtained, blank development may be performed by analysis of reverse press-forming to identify a portion of the waveform blank model 7 that has an effect on the deviation amount of shape change. The same applies to the second deviation amount acquisition step S13.

### <Generation Step of Cycle Deviation Waveform Blank Model>

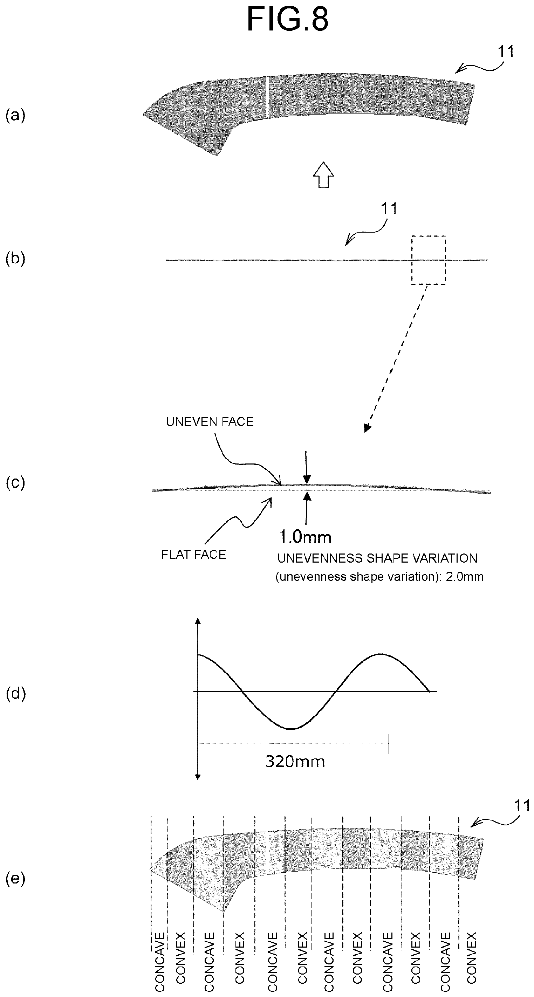

The generation step S9 of a cycle deviation waveform blank model is a step of generating a cycle deviation waveform blank model 11 having a waveform that has a wavelength and an amplitude identical to and a cycle deviated from the waveform of the waveform blank model 7 (see the example of FIG. 8(a)). A specific shape will be described below.

The example illustrated in FIG. 8(a) is a blank model having a cyclic waveform that has a predetermined wavelength and a predetermined amplitude, and the shade in FIG. 8(a) represents unevenness. FIG. 8(b) illustrates a state of the blank model in FIG. 8(a) viewed from a direction of an open arrow, and FIG. 8(c) is a partially enlarged view of FIG. 8(b). In the example illustrated in FIG. 8, the sheet thickness is 1.2 mm, and the amplitude and wavelength of unevenness are the same as those of the waveform blank model 7 in FIG. 5, but the cycle of the waveform is deviated rightward on the paper by 1/4 wavelength from that of the waveform blank model 7 (see FIGS. 8(d) and 8(e)).

### <Shape Acquisition Step of Press-Formed Part Using Cycle Deviation Waveform Blank Model>

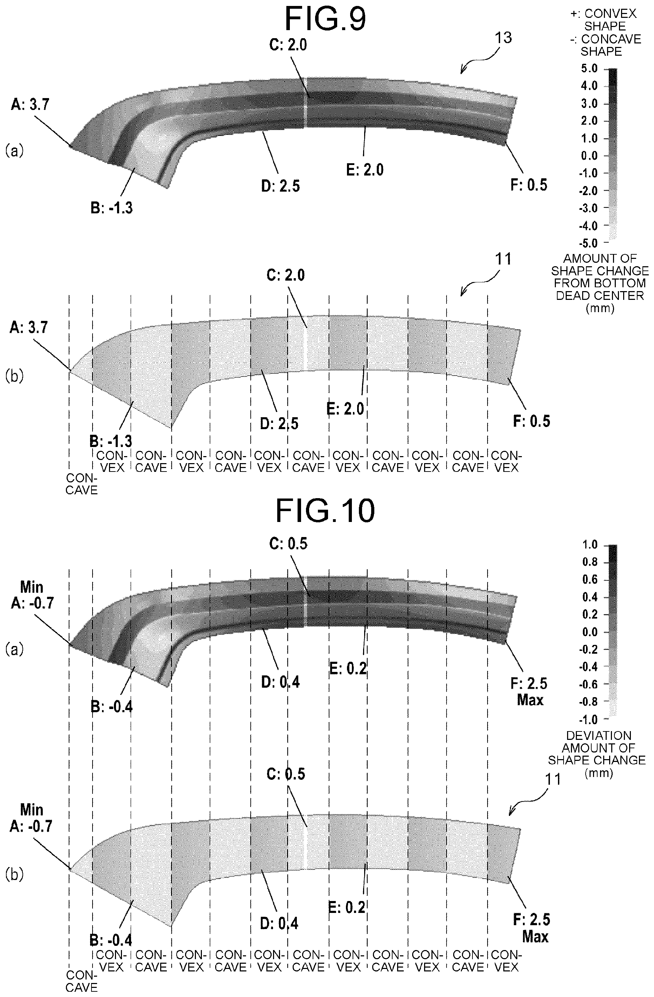

The shape acquisition step S11 of a press-formed part using a cycle deviation waveform blank model is a step of performing press forming analysis where press forming is performed using the cycle deviation waveform blank model 11 with the same predetermined tool of press forming model as that in the shape acquisition step S1 of a standard press-formed part, and acquiring the shape of the press-formed part after die release as the shape of a cycle deviation waveform blank press-formed part. A shape 13 of the cycle deviation waveform blank press-formed part is illustrated in FIG. 9(a). The colors and numerical values presented in FIG. 9(a) are the same as those in FIGS. 4(a) and 6(a).

In the present example, as illustrated in FIG. 9(a), the amounts of shape change were 3.7 mm at the left end portion (portion A) of the shape 13 of the cycle deviation waveform blank press-formed part, -1.3 mm at the left end of the top sheet portion (portion B), 2.0 mm at the center portion in the longitudinal direction (portion C), 2.0 to 2.5 mm at the bottom portion (portions D and E), and 0.5 mm at the right end portion (portion F). FIG. 9(b) illustrates the amounts of shape change at the portions A to F in the shape 13 of the cycle deviation waveform blank press-formed part in correspondence with the cycle deviation waveform blank model 11 before press forming analysis (FIG. 8(e)).

### <Second Deviation Amount Acquisition Step>

The second deviation amount acquisition step S13 is a step of comparing the shape 5 of the standard press-formed part and the shape 13 of the cycle deviation waveform blank press-formed part and obtaining a portion where both the shapes are deviated from each other and a deviation amount of shape change. The method of obtaining the deviation amount of shape change is similar to the method described in the first deviation amount acquisition step S7, and accordingly the description thereof will be omitted.

FIGS. 10(a) and 10(b) illustrate the deviation amount of shape change when the shape 5 of the standard press-formed part (FIG. 4(a)) is compared with the shape 13 of the cycle deviation waveform blank press-formed part (FIG. 9(a)) and the unevenness shape of the cycle deviation waveform blank model 11 in correspondence with each other. The meanings of Max and Min in the drawing are the same as those in FIG. 7. As illustrated in FIG. 10(a), the deviation amount of shape change in the case of using the cycle deviation waveform blank model 11 was -0.7 mm at the portion A, -0.4 mm at the portion B, 0.5 mm at the portion C, 0.4 mm at the portion D, 0.2 mm at the portion E, and 2.5 mm at the portion F.

In comparison with FIG. 10(a) and FIG. 10(b), the portion F most greatly deviated in the convex direction is considered to be affected by the convex shape of the corresponding portion of the cycle deviation waveform blank model 11. Similarly, the portion A most greatly deviated in the concave direction is considered to be affected by the concave shape of the corresponding portion of the cycle deviation waveform blank model 11.

### <Step to Identify Portions Requiring Countermeasures>

The step S15 to identify portions requiring countermeasures is a step of identifying, as a portion requiring countermeasures, a portion having a deviation amount of shape change exceeding a threshold among the deviation amounts of shape change obtained in the first deviation amount acquisition step S7 and the second deviation amount acquisition step S13.

Joining of press-formed parts may be difficult, which requires some countermeasures when there is a large deviation in the shape of the press-formed part (particularly, a flange portion or the like) in some cases, for example, a case where a plurality of press-formed parts is overlapped and joined to be assembled to members of an automotive body. In view of this, in the present embodiment, portions assumed to have a large deviation due to a blank having shape variation are identified as portions requiring countermeasures. This step makes it possible to take countermeasures such as correcting a part of a tool of press forming.

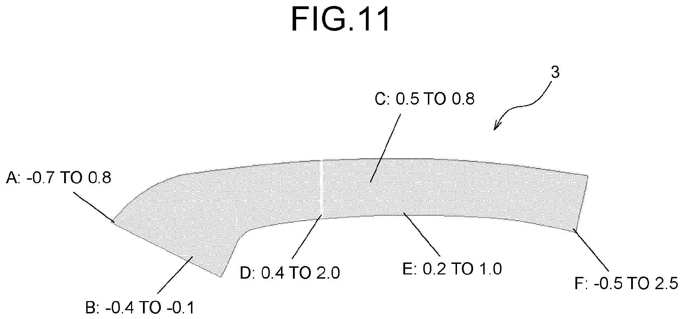

Both the deviation amount of shape change obtained in the first deviation amount acquisition step S7 (see FIG. 7) and the deviation amount of shape change obtained in the second deviation amount acquisition step S13 (see FIG. 10) are illustrated in FIG. 11 in correspondence with the blank shape (illustrated on the flat blank model 3).

For example, assuming that the threshold in the step S15 to identify portions requiring countermeasures is ±1.5 mm, the portion having the deviation amount of shape change exceeding the threshold is the portion D (the deviation amount of shape change obtained in the first deviation amount acquisition step S7 is 2.0 mm) and the portion F (the deviation amount obtained in the second deviation amount acquisition step S13 is 2.5 mm). Therefore, it is possible to take countermeasures such as identifying the portions D and F as the portions requiring countermeasures and correcting a part of the tool of press forming corresponding to such portions.

According to the present embodiment as described above, it is possible to know a portion where the shape variation of the blank has a large effect on the shape of the press-formed part after springback and a deviation amount of shape change attributable to the shape variation. A plurality of patterns of blank models assuming blanks having shape variation are generated and the deviation amount of shape change in each case is obtained. Thus, consideration is given to a difference in shape variation of individual actual blanks. Whether the press-formed part is defective is determined on the basis of the magnitude of the deviation amount of shape change, whereby whether each blank is defective can be predicted. Furthermore, with regard to the portion having a large deviation amount of shape change (exceeding the threshold), it is possible to identify which portion of the blank before press forming is causative of the shape defect, and countermeasures therefor can be taken promptly, leading also to improvement of productivity. As a result, it is possible to grasp the limit of the shape accuracy of a blank that falls within the range of the shape accuracy required for a press-formed part and to stably perform press forming that generates a favorable shape by screening a blank having an appropriate shape and taking countermeasures such as correcting a part of the tool of press forming.

Although only one type of cycle deviation waveform blank model is generated in the above, a plurality of types of cycle deviation waveform blank models may be generated. In this case, the waveforms of the cycle deviation waveform blank models preferably have periods deviated from each other (the wavelengths and the amplitudes are common to the waveform blank models and all the cycle deviation waveform blank models). By increasing the pattern of the blank model assuming the blank having shape variation, the difference in the shape variation of individual actual blanks can be more specifically considered.

In the above description, in comparing the shape of the press-formed part when the blank is flat (shape of a standard press-formed part) with the shape of the press-formed part when the blank has unevenness (shape of a waveform blank press-formed part or shape of a cycle deviation waveform blank press-formed part), the difference in the amount of shape change (springback amount) from the bottom dead center in the press forming direction is defined as the deviation amount of shape change, but the present invention is not limited thereto. For example, the deviation amount of shape change may be a difference obtained by subtracting the height in the press forming direction of each portion of the shape of the press-formed part after die release (after springback) in the case of a flat blank from the height in the press forming direction of each portion of the shape of the press-formed part after die release (after springback) in the case of a blank having unevenness. In this case, however, a fixed point common to the two shapes of press-formed parts need to be set, and the deviation amount of shape change may vary depending on how to select the fixed point. In this regard, as in the present embodiment, the following approach is preferably adopted, such as comparing the amounts of shape change based on the bottom dead center shape that is constant regardless of the shape of a blank. This allows the deviation amount of shape change to be accurately and easily obtained.

In the above, the blank model having the cyclic waveform is generated as the model corresponding to the blank collected from the metal sheet having shape variation, but the blank model reflecting the irregular unevenness shape of an actual blank may be generated. For example, the shape of an actual blank collected from a metal sheet having shape variation may be measured by a laser rangefinder-based 3D shape measuring instrument or the like, and an actual blank model having a shape corresponding to an actual irregular unevenness shape may be generated using the measurement data.

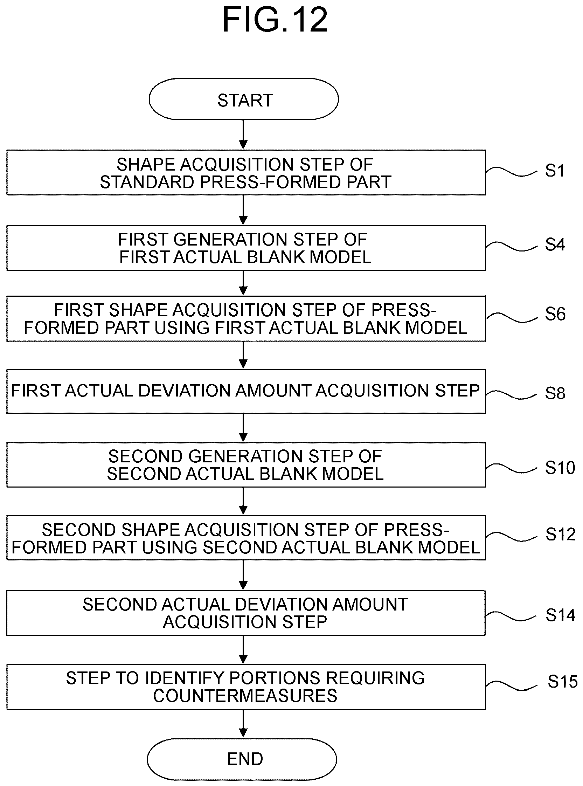

As illustrated in FIG. 12, the press forming analysis method in this case includes: a first generation step S4 of a first actual blank model instead of the generation step S3 of a waveform blank model; a first shape acquisition step S6 of a press-formed part using a first actual blank model instead of the shape acquisition step S5 of a press-formed part using a waveform blank model; a first actual deviation amount acquisition step S8 instead of the first deviation amount acquisition step S7; a second generation step S10 of a second actual blank model instead of the generation step S9 of a cycle deviation waveform blank model; a second shape acquisition step S12 of a press-formed part using a second actual blank model instead of the shape acquisition step S11 of a press-formed part using a cycle deviation waveform blank model; and a second actual deviation amount acquisition step S14 instead of the second deviation amount acquisition step S13. Each step will be specifically described below.

The first generation step S4 of a first actual blank model is a step of measuring the shape of the first actual blank collected from the predetermined position of the metal sheet and generating the first actual blank model based on the measurement result. The first shape acquisition step S6 of a press-formed part using a first actual blank model is a step of performing press forming analysis where press forming is performed using the first actual blank model with the same predetermined tool of press forming model as that in the shape acquisition step S1 of a standard press-formed part, and acquiring the shape of the press-formed part after die release as a first shape of an actual blank press-formed part. The first actual deviation amount acquisition step S8 is a step of comparing the shape of a standard press-formed part and the first shape of the actual blank press-formed part and obtaining a portion where both the shapes are deviated from each other and a deviation amount of shape change.

The second generation step S10 of a second actual blank model is a step of measuring the shape(s) of one or more second actual blank collected from a position of a metal sheet different from that from which the first actual blank is collected and generating one or more types of the second actual blank model based on the measurement result. The second shape acquisition step S12 of a press-formed part using a second actual blank model is a step of performing press forming analysis where press forming is performed using the second actual blank model with the same predetermined tool of press forming model as that in the shape acquisition step S1 of a standard press-formed part, and acquiring the shape of the press-formed part after die release as a second shape of an actual blank press-formed part. The second actual deviation amount acquisition step S14 is a step of comparing the shape of a standard press-formed part and one or more types of the second shape(s) of the actual blank press-formed part(s) and obtaining a portion where both the shapes are deviated from each other and a deviation amount of shape change.

The above is the same as the example of the flow illustrated in FIG. 1 except that a blank model reflecting an irregular unevenness shape of an actual blank collected from a metal sheet having shape variation is generated and used for analysis, and thus detailed description will be omitted. However, the effect can be obtained similarly to the example of FIG. 1.

### [Second Embodiment]

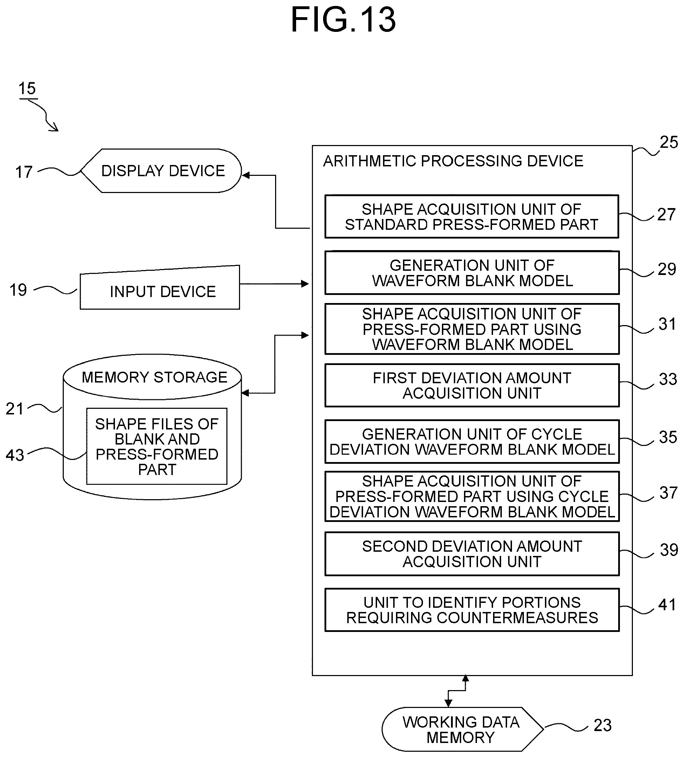

The press forming analysis method described in the first embodiment can be implemented by causing a computer such as a personal computer (PC) to execute a preset program. A press forming analysis apparatus as an example of such an apparatus will be described in the present embodiment. As illustrated in FIG. 13, a press forming analysis apparatus 15 according to the present embodiment is configured by a computer such as a personal computer (PC) and includes a display device 17, an input device 19, a memory storage 21, a working data memory 23, and an arithmetic processing device 25. Then, the display device 17, the input device 19, the memory storage 21, and the working data memory 23 are connected to the arithmetic processing device 25, and each function is executed by a command from the arithmetic processing device 25. Hereinafter, each configuration of the press forming analysis apparatus according to the present embodiment will be described on the assumption that the press-formed part 1 illustrated in FIG. 2 is set as a target to be analyzed.

### <<Display Device>>

The display device 17 is used for displaying an analysis result or the like and includes an LCD monitor or the like.

### <<Input Device>>

The input device 19 is used for applications such as: an instruction to display a blank, a press-formed part or the like; and a condition input by an operator. The input device 19 includes a keyboard, a mouse or the like.

### <<Memory Storage>>

The memory storage 21 is used for storing various files such as shape files 43 of the blank and the press-formed part. The memory storage 21 includes a hard disk or the like.

### <<Working Data Memory>>

The working data memory 23 is used for temporary storage and calculation of data used by the arithmetic processing device 25. The working data memory 23 includes a random access memory (RAM) or the like.

### <<Arithmetic Processing Device>>

As illustrated in FIG. 13, the arithmetic processing device 25 includes a shape acquisition unit 27 of a standard press-formed part, a generation unit 29 of a waveform blank model, a shape acquisition unit 31 of a press-formed part using a waveform blank model, a first deviation amount acquisition unit 33, a generation unit 35 of a cycle deviation waveform blank model, a shape acquisition unit 37 of a press-formed part using a cycle deviation waveform blank model, a second deviation amount acquisition unit 39, and a unit 41 to identify portions requiring countermeasures. The arithmetic processing device 25 includes a central processing unit (CPU) such as a PC. The CPU executes a predetermined program to cause each of these units to function. The functions of each of the above units in the arithmetic processing device 25 will be described below.

The shape acquisition unit 27 of a standard press-formed part executes the shape acquisition step S1 of a standard press-formed part described in the first embodiment. Similarly, the generation unit 29 of a waveform blank model executes the generation step S3 of a waveform blank model, the shape acquisition unit 31 of a press-formed part using a waveform blank model executes the shape acquisition step S5 of a press-formed part using a waveform blank model, the first deviation amount acquisition unit 33 executes the first deviation amount acquisition step S7, the generation unit 35 of a cycle deviation waveform blank model executes the generation step S9 of a cycle deviation waveform blank model, the shape acquisition unit 37 of a press-formed part using a cycle deviation waveform blank model executes the shape acquisition step S11 of a press-formed part using a cycle deviation waveform blank model, the second deviation amount acquisition unit 39 executes the second deviation amount acquisition step S13, and the unit 41 to identify portions requiring countermeasures executes the step S15 to identify portions requiring countermeasures.

As in the first embodiment, with the press forming analysis apparatus 15 according to the present embodiment, it is possible to know a portion where the shape variation of the blank has a large effect on the shape of the press-formed part after springback and a deviation amount of shape change attributable to the shape variation. Since a plurality of patterns of blank models assuming blanks having shape variation are generated and the deviation amount of shape change in each case is obtained, consideration is given to a difference in shape variation of individual actual blanks. Whether the press-formed part is defective is determined on the basis of the magnitude of the deviation amount of shape change, whereby whether each blank is defective can be predicted. Furthermore, with regard to the portion having a large deviation amount of shape change (exceeding the threshold), it is possible to identify which portion of the blank before press forming is causative of the shape defect, and countermeasures therefor can be taken promptly, leading also to improvement of productivity. As a result, it is possible to grasp the limit of the shape accuracy of a blank that falls within the range of the shape accuracy required for a press-formed part and to stably perform press forming that generates a favorable shape by screening a blank having an appropriate shape and taking countermeasures such as correcting a part of the tool of press forming.

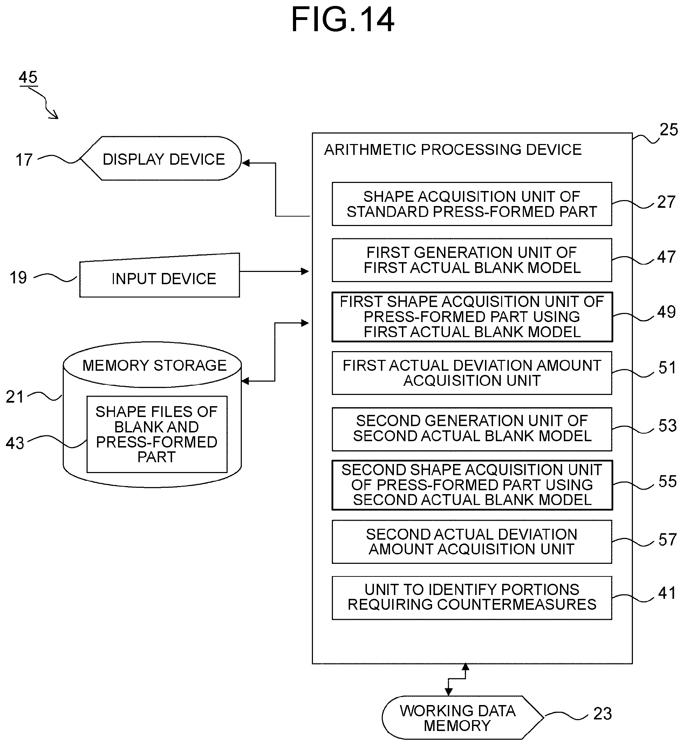

The press forming analysis apparatus 15 of FIG. 13 implements the press forming analysis method of FIG. 1. In a case where the press forming analysis method of FIG. 12 is implemented, a press forming analysis apparatus 45 as illustrated in FIG. 14 can be used. In FIG. 14, the same components as those in FIG. 13 are denoted by the same reference signs, and description thereof will be omitted. The press forming analysis apparatus 45 in FIG. 14 includes: a first generation unit 47 of a first actual blank model instead of the generation unit 29 of a waveform blank model; a first shape acquisition unit 49 of a press-formed part using a first actual blank model instead of the shape acquisition unit 31 of a press-formed part using a waveform blank model; a first actual deviation amount acquisition unit 51 instead of the first deviation amount acquisition unit 33; a second generation unit 53 of a second actual blank model instead of the generation unit 35 of a cycle deviation waveform blank model; a second shape acquisition unit 55 of a press-formed part using a second actual blank model instead of the shape acquisition unit 37 of a press-formed part using a cycle deviation waveform blank model; and a second actual deviation amount acquisition unit 57 instead of the second deviation amount acquisition unit 39.

The first generation unit 47 of a first actual blank model executes the first generation step S4 of a first actual blank model described in another aspect of the first embodiment. Similarly, the first shape acquisition unit 49 of a press-formed part using a first actual blank model executes the first shape acquisition step S6 of a press-formed part using a first actual blank model, the first actual deviation amount acquisition unit 51 executes the first actual deviation amount acquisition step S8, the second generation unit 53 of a second actual blank model executes the second generation step S10 of a second actual blank model, the second shape acquisition unit 55 of a press-formed part using a second actual blank model executes the second shape acquisition step S12 of a press-formed part using a second actual blank model, and the second actual deviation amount acquisition unit 57 executes the second actual deviation amount acquisition step S14. The press forming analysis apparatus 45 also has the same effect as the press forming analysis apparatus 15.

As described above, each unit of the arithmetic processing device 25 in the press forming analysis apparatuses 15 and 45 of the present embodiment is implemented by the CPU executing a predetermined program. Therefore, it can be specified that the press forming analysis program according to the present invention causes a computer to function as the shape acquisition unit 27 of a standard press-formed part, the generation unit 29 of a waveform blank model (or the first generation unit 47 of a first actual blank model), the shape acquisition unit 31 of a press-formed part using a waveform blank model (or the first shape acquisition unit 49 of a press-formed part using a first actual blank model), the first deviation amount acquisition unit 33 (or the first actual deviation amount acquisition unit 51), the generation unit 35 of a cycle deviation waveform blank model (or the second generation unit 53 of a second actual blank model), the shape acquisition unit 37 of a press-formed part using a cycle deviation waveform blank model (or the second shape acquisition unit 55 of a press-formed part using a second actual blank model), the second deviation amount acquisition unit 39 (or the second actual deviation amount acquisition unit 57), and the unit 41 to identify portions requiring countermeasures.

### [Example]

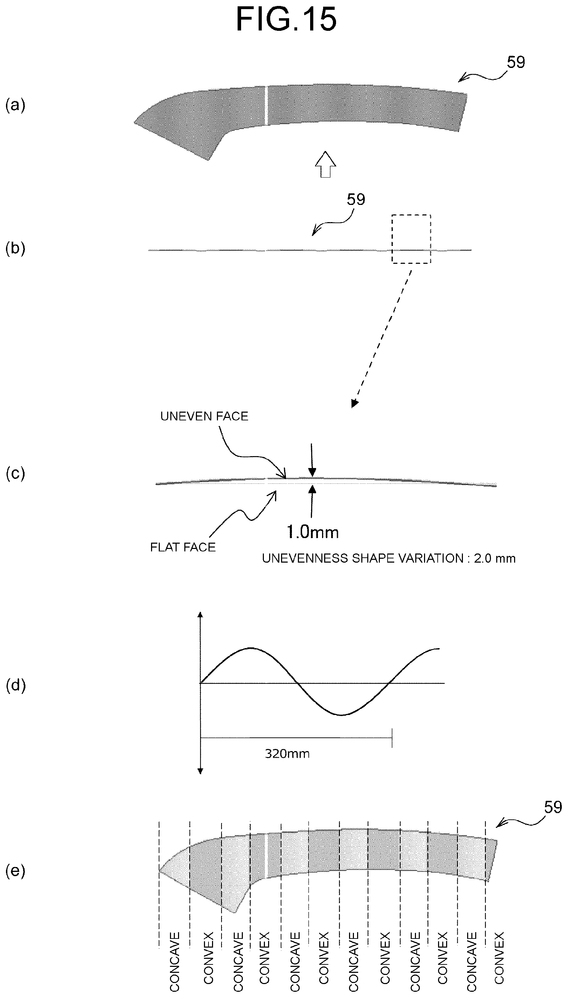

In order to confirm the effect of the present invention, the press forming analysis method described in FIG. 1 was performed. As in the above embodiments, crash forming was adopted as the CAE analysis-based forming in the present examples. A blank model of a 1.5 GPa-class steel sheet having a sheet thickness of 1.2 mm was used. In the present example, the shape acquisition step S1 of a standard press-formed part to the first deviation amount acquisition step S7 were performed as in the first embodiment. Therefore, the flat blank model 3, the shape 5 of the standard press-formed part, the waveform blank model 7, the shape 9 of the waveform blank press-formed part, and the deviation amount of shape change obtained in the first deviation amount acquisition step S7 are similar to those in FIGS. 3 to 7, and thus the description thereof will be omitted. In the present example, in the generation step S9 of a cycle deviation waveform blank model, a cycle deviation waveform blank model 59 different from the cycle deviation waveform blank model 11 of the first embodiment (see FIG. 8) was generated. Hereinafter, steps after the generation step S9 of a cycle deviation waveform blank model in the present example will be described with reference to FIGS. 15 to 18. The numerical values, shade, a convex shape, a concave shape, Max, and Min represented in FIGS. 15 to 18 have the same meanings as those described in the above embodiment.

FIG. 15(a) illustrates the cycle deviation waveform blank model 59 generated in the generation step S9 of a cycle deviation waveform blank model of the present example, and FIG. 15(b) illustrates a state of the blank model in FIG. 15(a) viewed from a direction of an open arrow. FIG. 15(c) is a partially enlarged view of FIG. 15(b). In the example illustrated in FIG. 15, the sheet thickness is 1.2 mm, and the amplitude and wavelength of unevenness are the same as those of the waveform blank model 7 in FIG. 5, but the cycle of the waveform is deviated by 1/2 wavelength from that of the waveform blank model 7 (see FIGS. 15(d) and 15(e)).

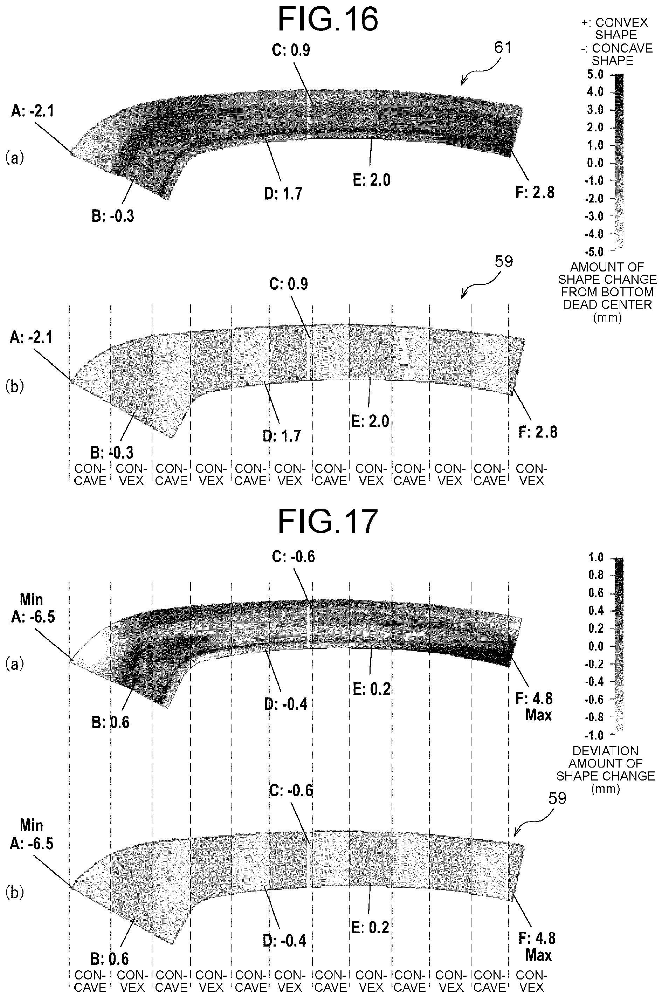

FIG. 16(a) illustrates a shape 61 of a cycle deviation waveform blank press-formed part obtained by performing the shape acquisition step S11 of a press-formed part using a cycle deviation waveform blank model using the cycle deviation waveform blank model 59 of FIG. 15. As illustrated in FIG. 16(a), the amounts of shape change were -2.1 mm at the left end portion (portion A) of the shape 61 of the cycle deviation waveform blank press-formed part, -0.3 mm at the left end of the top sheet portion (portion B), 0.9 mm at the center portion in the longitudinal direction (portion C), 1.7 to 2.0 mm at the bottom portion (portions D and E), and 2.8 mm at the right end portion (portion F). FIG. 16(b) illustrates the amounts of shape change at the portions A to F in the shape 61 of the cycle deviation waveform blank press-formed part in correspondence with the cycle deviation waveform blank model 59 before press forming analysis (FIG. 15(e)).

FIGS. 17(a) and 17(b) illustrate the deviation amount of shape change when the shape 5 of the standard press-formed part is compared with the shape 61 of the cycle deviation waveform blank press-formed part and the unevenness shape of the cycle deviation waveform blank model 59 in correspondence with each other in the second deviation amount acquisition step S13. As illustrated in FIG. 17(a), the deviation amounts of shape change in the case of using the cycle deviation waveform blank model 59 were -6.5 mm at the portion A, 0.6 mm at the portion B, -0.6 mm at the portion C, -0.4 mm at the portion D, 0.2 mm at the portion E, and 4.8 mm at the portion F.

In comparison with FIG. 17(a) and FIG. 17(b), the portion F most greatly deviated in the convex direction is considered to be affected by the convex shape of the corresponding portion of the cycle deviation waveform blank model 59. Similarly, the portion A most greatly deviated in the concave direction is considered to be affected by the concave shape of the corresponding portion of the cycle deviation waveform blank model 59.

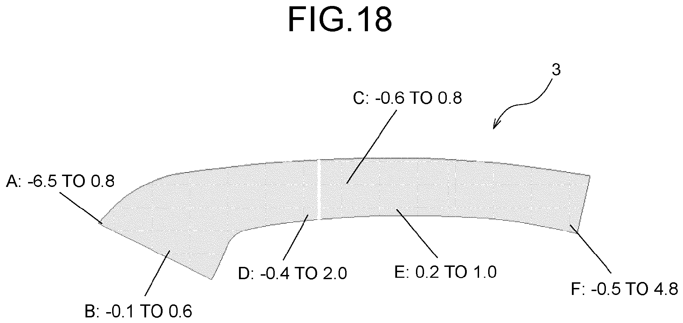

Both the deviation amount of shape change obtained in the first deviation amount acquisition step S7 (see FIG. 7) and the deviation amount of shape change obtained in the second deviation amount acquisition step S13 (see FIG. 17) are illustrated in FIG. 18 in correspondence with the blank shape (illustrated on the flat blank model 3).

In performing joining for assembling the parts constituting an automotive body, the threshold of the step S15 to identify portions requiring countermeasures in the present example was set to ±2.0 mm. As a result, the fact that some countermeasures were required for the portion A and the portion F was successively grasped at a glance. Therefore, it is possible to stably manufacture a press-formed part having a favorable shape by taking countermeasures such as correcting the tool of press forming corresponding to the portions, adjusting the portions of the blank, and changing the positions of the blank to be collected from the metal sheet.

### Industrial Applicability

According to the present invention, it is possible to predict the effect of shape variation of a blank on the dimensional accuracy of a press-formed part when press forming is performed using the blank collected from a metal sheet having shape variation and to quickly take countermeasures to improve the dimensional accuracy of the press-formed part. Therefore, the productivity of the press-formed part can be improved.

### Reference Signs List

1 PRESS-FORMED PART (TARGET SHAPE)
3 FLAT BLANK MODEL
5 SHAPE OF STANDARD PRESS-FORMED PART
7 WAVEFORM BLANK MODEL
9 SHAPE OF WAVEFORM BLANK PRESS-FORMED PART
11 CYCLE DEVIATION WAVEFORM BLANK MODEL
13 SHAPE OF CYCLE DEVIATION WAVEFORM BLANK PRESS-FORMED PART
15 PRESS FORMING ANALYSIS APPARATUS
17 DISPLAY DEVICE
19 INPUT DEVICE
21 MEMORY STORAGE
23 WORKING DATA MEMORY
25 ARITHMETIC PROCESSING DEVICE
27 SHAPE ACQUISITION UNIT OF STANDARD PRESS-FORMED PART
29 GENERATION UNIT OF WAVEFORM BLANK MODEL
31 SHAPE ACQUISITION UNIT OF PRESS-FORMED PART USING WAVEFORM BLANK MODEL
33 FIRST DEVIATION AMOUNT ACQUISITION UNIT
35 GENERATION UNIT OF CYCLE DEVIATION WAVEFORM BLANK MODEL
37 SHAPE ACQUISITION UNIT OF PRESS-FORMED PART USING CYCLE DEVIATION WAVEFORM BLANK MODEL
39 SECOND DEVIATION AMOUNT ACQUISITION UNIT
41 UNIT TO IDENTIFY PORTIONS REQUIRING COUNTERMEASURES
43 SHAPE FILE OF BLANK AND PRESS-FORMED PART
45 PRESS FORMING ANALYSIS APPARATUS (ANOTHER ASPECT)
47 FIRST GENERATION UNIT OF FIRST ACTUAL BLANK MODEL
49 FIRST SHAPE ACQUISITION UNIT OF PRESS-FORMED PART USING FIRST ACTUAL BLANK MODEL
51 FIRST ACTUAL DEVIATION AMOUNT ACQUISITION UNIT
53 SECOND GENERATION UNIT OF SECOND ACTUAL BLANK MODEL
55 SECOND SHAPE ACQUISITION UNIT OF PRESS-FORMED PART USING SECOND ACTUAL BLANK MODEL
57 SECOND ACTUAL DEVIATION AMOUNT ACQUISITION UNIT
59 CYCLE DEVIATION WAVEFORM BLANK MODEL (EXAMPLE)
61 SHAPE OF CYCLE DEVIATION WAVEFORM BLANK PRESS-FORMED PART (EXAMPLE)

## Claims

1. A computer-implemented press forming analysis method for predicting an effect of shape variation of a blank when press forming is performed using the blank collected from a metal sheet having the shape variation, the press forming analysis method comprising:
a shape acquisition step of a standard press-formed part of performing press forming analysis where press forming is performed with a predetermined tool of press forming model using a flat blank model that has a flat shape, and acquiring a shape of a press-formed part after die release as a shape of the standard press-formed part;
a generation step of a waveform blank model of generating a waveform blank model having a waveform that has a predetermined wavelength and a predetermined amplitude corresponding to the shape variation;
a shape acquisition step of a press-formed part using the waveform blank model of performing press forming analysis where press forming is performed with the predetermined tool of press forming model using the waveform blank model, and acquiring a shape of the press-formed part after die release as a shape of a waveform blank press-formed part;
a first deviation amount acquisition step of comparing the shape of the standard press-formed part and the shape of the waveform blank press-formed part, and obtaining a portion where both the shapes are deviated from each other and a deviation amount of shape change;
a generation step of a cycle deviation waveform blank model of generating one or more types of cycle deviation waveform blank models each having a waveform that has an amplitude identical to and a cycle deviated from the waveform in the waveform blank model;
a shape acquisition step of a press-formed part using the cycle deviation waveform blank model of performing press forming analysis where press forming is performed with the predetermined tool of press forming model using the cycle deviation waveform blank model, and acquiring a shape of the press-formed part after die release as a shape of a cycle deviation waveform blank press-formed part;
a second deviation amount acquisition step of comparing the shape of the standard press-formed part with one or more types of the shape of the cycle deviation waveform blank press-formed part, and obtaining a portion where both the shapes are deviated from each other and a deviation amount of shape change; and
a step to identify portions requiring countermeasures of identifying, as a portion requiring countermeasures, a portion having a deviation amount of shape change exceeding a threshold among the deviation amounts of shape change obtained in the first deviation amount acquisition step and the second deviation amount acquisition step.

2. The press forming analysis method according to claim 1, wherein
the first deviation amount acquisition step includes acquiring, as the deviation amount of shape change, a difference between: a springback amount of a predetermined portion in the shape of the standard press-formed part; and a springback amount of the same portion in the shape of the waveform blank press-formed part as the predetermined portion in the shape of the standard press-formed part, and
the second deviation amount acquisition step includes acquiring, as the deviation amount of shape change, a difference between: the springback amount of the predetermined portion in the shape of the standard press-formed part; and a springback amount of the same portion in the shape of the cycle deviation waveform blank press-formed part as the predetermined portion in the shape of the standard press-formed part.

3. A computer**-**implemented
press forming analysis method for predicting an effect of shape variation of a blank when press forming is performed using the blank collected from a metal sheet having the shape variation, the press forming analysis method comprising:
a shape acquisition step of a standard press-formed part of performing press forming analysis where press forming is performed with a predetermined tool of press forming model using a flat blank model that has a flat shape, and acquiring a shape of a press-formed part after die release as a shape of the standard press-formed part;
a first generation step of a first actual blank model of generating the first actual blank model on a basis of a measurement result obtained by measuring a shape of a first actual blank collected from a predetermined position of the metal sheet;
a first shape acquisition step of a press-formed part using the first actual blank model of performing press forming analysis where press forming is performed with the predetermined tool of press forming model using the first actual blank model, and acquiring a shape of the press-formed part after die release as a first shape of an actual blank press-formed part;
a first actual deviation amount acquisition step of comparing the shape of the standard press-formed part and the first shape of the actual blank press-formed part, and obtaining a portion where both the shapes are deviated from each other and a deviation amount of shape change;
a second generation step of a second actual blank model of generating one or more types of second actual blank models on a basis of a measurement result obtained by measuring a shape or shapes of one or more of second actual blanks collected from a position of the metal sheet, the position being different from a position from which the first actual blank is collected;
a second shape acquisition step of a press-formed part using the one or more types of second actual blank models of performing press forming analysis where press forming is performed with the predetermined tool of press forming model using the one or more types of second actual blank models, and acquiring a shape of the press-formed part after die release as a second shape of an actual blank press-formed part;
a second actual deviation amount acquisition step of comparing the shape of the standard press-formed part with one or more types of the second shape of the actual blank press-formed part, and obtaining a portion where both the shapes are deviated from each other and a deviation amount of shape change; and
a step to identify portions requiring countermeasures of identifying, as a portion requiring countermeasures, a portion having a deviation amount of shape change exceeding a threshold among the deviation amounts of shape change obtained in the first actual deviation amount acquisition step and the second actual deviation amount acquisition step.

4. The press forming analysis method according to claim 3, wherein
the first actual deviation amount acquisition step includes
acquiring, as the deviation amount of shape change, a difference between: a springback amount of a predetermined portion in the shape of the standard press-formed part; and a springback amount of the same portion in the first shape of the actual blank press-formed part as the predetermined portion in the shape of the standard press-formed part, and
the second actual deviation amount acquisition step includes
acquiring, as the deviation amount of shape change, a difference between: the springback amount of the predetermined portion in the shape of the standard press-formed part; and a springback amount of the same portion in the second shape of the actual blank press-formed part as the predetermined portion in the shape of the standard press-formed part.

5. A press forming analysis apparatus for predicting an effect of shape variation of a blank when press forming is performed using the blank collected from a metal sheet having the shape variation, the press forming analysis apparatus comprising:
a shape acquisition unit of a standard press-formed part, the shape acquisition unit being configured to perform press forming analysis where press forming is performed with a predetermined tool of press forming model using a flat blank model that has a flat shape, and acquire a shape of a press-formed part after die release as a shape of the standard press-formed part;
a generation unit of a waveform blank model, the generation unit being configured to generate a waveform blank model having a waveform that has a predetermined wavelength and a predetermined amplitude corresponding to the shape variation;
a shape acquisition unit of a press-formed part using the waveform blank model, the shape acquisition unit being configured to perform press forming analysis where press forming is performed with the predetermined tool of press forming model using the waveform blank model, and acquire a shape of the press-formed part after die release as a shape of a waveform blank press-formed part;
a first deviation amount acquisition unit being configured to compare the shape of the standard press-formed part and the shape of the waveform blank press-formed part, and obtain a portion where both the shapes are deviated from each other and a deviation amount of shape change;
a generation unit of a cycle deviation waveform blank model, the generation unit being configured to generate one or more types of cycle deviation waveform blank models each having a waveform that has an amplitude identical to and a cycle deviated from the waveform in the waveform blank model;
a shape acquisition unit of a press-formed part using the cycle deviation waveform blank model, the shape acquisition unit being configured to perform press forming analysis where press forming is performed with the predetermined tool of press forming model using the cycle deviation waveform blank model, and acquire a shape of the press-formed part after die release as a shape of a cycle deviation waveform blank press-formed part;
a second deviation amount acquisition unit being configured to compare the shape of the standard press-formed part with one or more types of the shape of the cycle deviation waveform blank press-formed part, and obtain a portion where both the shapes are deviated from each other and a deviation amount of shape change; and
a unit to identify portions requiring countermeasures, the unit being configured to identify, as a portion requiring countermeasures, a portion having a deviation amount of shape change exceeding a threshold among the deviation amounts of shape change obtained in the first deviation amount acquisition unit and the second deviation amount acquisition unit.

6. The press forming analysis apparatus according to claim 5, wherein
the first deviation amount acquisition unit is being configured to
acquire, as the deviation amount of shape change, a difference between: a springback amount of a predetermined portion in the shape of the standard press-formed part; and a springback amount of the same portion in the shape of the waveform blank press-formed part as the predetermined portion in the shape of the standard press-formed part, and
the second deviation amount acquisition unit is configured to
acquire, as the deviation amount of shape change, a difference between: the springback amount of the predetermined portion in the shape of the standard press-formed part; and a springback amount of the same portion in the shape of the cycle deviation waveform blank press-formed part as the predetermined portion in the shape of the standard press-formed part.

7. A press forming analysis apparatus for predicting an effect of shape variation of a blank when press forming is performed using the blank collected from a metal sheet having the shape variation, the press forming analysis apparatus comprising:
a shape acquisition unit of a standard press-formed part, the shape acquisition unit being configured to perform press forming analysis where press forming is performed with a predetermined tool of press forming model using a flat blank model that has a flat shape, and acquire a shape of a press-formed part after die release as a shape of the standard press-formed part;
a first generation unit of an actual blank model, the first generation unit being configured to measure a shape of a first actual blank collected from a predetermined position of the metal sheet, and generate a first actual blank model on a basis of a measurement result;
a first shape acquisition unit of a press-formed part using the first actual blank model, the shape acquisition unit being configured to perform press forming analysis where press forming is performed with the predetermined tool of press forming model using the first actual blank model, and acquire a shape of the press-formed part after die release as a first shape of an actual blank press-formed part;
a first actual deviation amount acquisition unit configured to compare the shape of the standard press-formed part and the first shape of the actual blank press-formed part, and obtain a portion where both the shapes are deviated from each other and a deviation amount of shape change;
a second generation unit of an actual blank model, the second generation unit being configured to measure a shape or shapes of one or more second actual blanks collected from a position of the metal sheet, the position being different from a position from which the first actual blank is collected, and generate one or more types of second actual blank models on a basis of a measurement result;
a second shape acquisition unit of a press-formed part using an actual blank, the shape acquisition unit being configured to perform press forming analysis when press forming is performed with the predetermined tool of press forming model using the one or more types of second actual blank models, the shape acquisition unit being configured to acquire a shape of the press-formed part after die release as a shape of the press-formed part using the one or more second actual blanks;
a second actual deviation amount acquisition unit being configured to compare the shape of the standard press-formed part with one or more types of the second shape of the actual blank press-formed part, and obtain a portion where both the shapes are deviated from each other and a deviation amount of shape change; and
a unit to identify portions requiring countermeasures, the unit being configured to identify, as a portion requiring countermeasures, a portion having a deviation amount of shape change exceeding a threshold among the deviation amounts of shape change obtained in the first actual deviation amount acquisition unit and the second actual deviation amount acquisition unit.

8. The press forming analysis apparatus according to claim 7, wherein
the first actual deviation amount acquisition unit is configured to
acquire, as the deviation amount of shape change, a difference between: a springback amount of a predetermined portion in the shape of the standard press-formed part; and a springback amount of the same portion in the first shape of the actual blank press-formed part as the predetermined portion in the shape of the standard press-formed part, and
the second actual deviation amount acquisition unit is configured to
acquire, as the deviation amount of shape change, a difference between: the springback amount of the predetermined portion in the shape of the standard press-formed part; and a springback amount of the same portion in the second shape of the actual blank press-formed part as the predetermined portion in the shape of the standard press-formed part.

9. A press forming analysis program causing a computer to function as the press forming analysis apparatus according to any one of claims 5 to 8.

## Patentansprüche

1. Computerimplementiertes Pressformungsanalyseverfahren zum Vorhersagen einer Wirkung von Formschwankungen eines Rohlings, wenn die Pressformung unter Verwendung des Rohlings durchgeführt wird, der aus einem die Formschwankungen aufweisenden Metallblech gewonnen wurde, das Pressformungsanalyseverfahren umfassend:
einen Formerlangungsschritt eines standardmäßigen pressgeformten Teils eines Durchführens einer Pressformungsanalyse, wobei eine Pressformung mit einem vorbestimmten Werkzeug eines Pressformungsmodells unter Verwendung eines flachen Rohlingsmodells, das eine flache Form aufweist, durchgeführt wird, und eines Erlangens einer Form eines pressgeformten Teils nach der Stempelfreigabe als eine Form des standardmäßigen pressgeformten Teils;
einen Erzeugungsschritt eines Wellenform-Rohlingsmodells eines Erzeugens eines Wellenform-Rohlingsmodells, das eine Wellenform aufweist, die eine vorbestimmte Wellenlänge und eine vorbestimmte Amplitude entsprechend den Formschwankungen aufweist;
einen Formerlangungsschritt eines unter Verwendung des Wellenform-Rohlingsmodells pressgeformten Teils eines Durchführens einer Pressformungsanalyse, wobei eine Pressformung mit dem vorbestimmten Werkzeug des Pressformungsmodells unter Verwendung des Wellenform-Rohlingsmodells durchgeführt wird, und eines Erlangens einer Form des pressgeformten Teils nach der Stempelfreigabe als eine Form eines pressgeformten Wellenform-Rohling-Teils;
einen ersten Abweichungsbetragserlangungsschritt eines Vergleichens der Form des standardmäßigen pressgeformten Teils und der Form des pressgeformten Wellenform-Rohling-Teils und eines Erhaltens eines Abschnitts, in dem beide Formen voneinander abweichen, und eines Abweichungsbetrags einer Formänderung;
einen Erzeugungsschritt eines Zyklusabweichungs-Wellenform-Rohlingsmodells, eines Erzeugens eines oder mehrerer Typen von Zyklusabweichungs-Wellenform-Rohlingsmodellen, die jeweils eine Wellenform aufweisen, die eine Amplitude, die mit der Wellenform im Wellenform-Rohlingsmodell identisch ist, und einen Zyklus, der von dieser abweicht, aufweist;
einen Formerlangungsschritt eines unter Verwendung des Zyklusabweichungs-Wellenform-Rohlingsmodells pressgeformten Teils eines Durchführens einer Pressformungsanalyse, wobei eine Pressformung mit dem vorbestimmten Werkzeug des Pressformungsmodells unter Verwendung des Zyklusabweichungs-Wellenform-Rohlingsmodells durchgeführt wird, und eines Erlangens einer Form des pressgeformten Teils nach der Stempelfreigabe als eine Form eines pressgeformten Zyklusabweichungs-Wellenform-Rohling-Teils;
einen zweiten Abweichungsbetragserlangungsschritt eines Vergleichens der Form des standardmäßigen pressgeformten Teils mit einem oder mehreren Typen der Form des pressgeformten Zyklusabweichungs-Wellenform-Rohling-Teils und eines Erhaltens eines Abschnitts, in dem beide Formen voneinander abweichen, und eines Abweichungsbetrags einer Formänderung; und
einen Schritt zum Identifizieren von Abschnitten, die Gegenmaßnahmen erfordern, wobei die Abschnitte einen Abweichungsbetrag einer Formänderung aufweisen, der einen Schwellenwert unter den im ersten Abweichungsbetragserlangungsschritt und im zweiten Abweichungsbetragserlangungsschritt erhaltenen Abweichungsbeträgen der Formänderung überschreitet.

2. Pressformungsanalyseverfahren nach Anspruch 1, wobei
der erste Abweichungsbetragserlangungsschritt einschließt
Erlangen, als den Abweichungsbetrag der Formänderung, einer Differenz zwischen: einem Rückfederungsbetrag eines vorbestimmten Abschnitts in der Form des standardmäßigen pressgeformten Teils; und einem Rückfederungsbetrag desselben Abschnitts, wie der vorbestimmte Abschnitt in der Form des standardmäßigen pressgeformten Teils, in der Form des pressgeformten Wellenform-Rohling-Teils, und
der zweite Abweichungsbetragserlangungsschritt einschließt
Erlangen, als den Abweichungsbetrag der Formänderung, einer Differenz zwischen: dem Rückfederungsbetrag des vorbestimmten Abschnitts in der Form des standardmäßigen pressgeformten Teils; und einem Rückfederungsbetrag desselben Abschnitts, wie der vorbestimmte Abschnitt in der Form des standardmäßigen pressgeformten Teils, in der Form des pressgeformten Zyklusabweichungs-Wellenform-Rohling-Teils.

3. Computerimplementiertes Pressformungsanalyseverfahren zum Vorhersagen einer Wirkung von Formschwankungen eines Rohlings, wenn die Pressformung unter Verwendung des Rohlings durchgeführt wird, der aus einem die Formschwankungen aufweisenden Metallblech gewonnen wurde, das Pressformungsanalyseverfahren umfassend:
einen Formerlangungsschritt eines standardmäßigen pressgeformten Teils eines Durchführens einer Pressformungsanalyse, wobei eine Pressformung mit einem vorbestimmten Werkzeug eines Pressformungsmodells unter Verwendung eines flachen Rohlingsmodells, das eine flache Form aufweist, durchgeführt wird, und eines Erlangens einer Form eines pressgeformten Teils nach der Stempelfreigabe als eine Form des standardmäßigen pressgeformten Teils;
einen ersten Erzeugungsschritt eines ersten tatsächlichen Rohlingsmodells eines Erzeugens des ersten tatsächlichen Rohlingsmodells auf der Grundlage eines Messergebnisses, das durch Messen einer Form eines ersten tatsächlichen Rohlings erhalten wird, der aus einer vorbestimmten Position des Metallblechs gewonnen wurde;
einen ersten Formerlangungsschritt eines unter Verwendung des ersten tatsächlichen Rohlingsmodells pressgeformten Teils eines Durchführens einer Pressformungsanalyse, wobei eine Pressformung mit dem vorbestimmten Werkzeug des Pressformungsmodells unter Verwendung des ersten tatsächlichen Rohlingsmodells durchgeführt wird, und eines Erlangens einer Form des pressgeformten Teils nach der Stempelfreigabe als eine erste Form eines tatsächlichen pressgeformten Rohling-Teils;
einen ersten tatsächlichen Abweichungsbetragserlangungsschritt eines Vergleichens der Form des standardmäßigen pressgeformten Teils und der ersten Form des tatsächlichen pressgeformten Rohling-Teils und eines Erhaltens eines Abschnitts, in dem beide Formen voneinander abweichen, und eines Abweichungsbetrags einer Formänderung;
einen zweiten Erzeugungsschritt eines zweiten tatsächlichen Rohlingsmodells eines Erzeugens eines oder mehrerer Typen von zweiten tatsächlichen Rohlingsmodellen auf der Grundlage eines Messergebnisses, das durch Messen einer oder mehrerer Formen eines oder mehrerer zweiter tatsächlicher Rohlinge erhalten wird, die aus einer Position des Metallblechs gewonnen wurden, wobei sich diese Position von einer Position unterscheidet, aus der der erste tatsächliche Rohling gewonnen wird;
einen zweiten Formerlangungsschritt eines unter Verwendung des einen oder der mehreren Typen von zweiten tatsächlichen Rohlingsmodellen pressgeformten Teils eines Durchführens einer Pressformungsanalyse, wobei eine Pressformung mit dem vorbestimmten Werkzeug des Pressformungsmodells unter Verwendung des einen oder der mehreren Typen von zweiten tatsächlichen Rohlingsmodellen durchgeführt wird, und eines Erlangens einer Form des pressgeformten Teils nach der Stempelfreigabe als eine zweite Form eines tatsächlichen pressgeformten Rohling-Teils;
einen zweiten tatsächlichen Abweichungsbetragserlangungsschritt eines Vergleichens der Form des standardmäßigen pressgeformten Teils mit einem oder mehreren Typen der zweiten Form des tatsächlichen pressgeformten Rohling-Teils und eines Erhaltens eines Abschnitts, in dem beide Formen voneinander abweichen, und eines Abweichungsbetrags einer Formänderung; und
einen Schritt zum Identifizieren von Abschnitten, die Gegenmaßnahmen erfordern, als einen Abschnitt, der Gegenmaßnahmen erfordert, wobei der Abschnitt einen Abweichungsbetrag einer Formänderung aufweisen, der einen Schwellenwert unter den im ersten tatsächlichen Abweichungsbetragserlangungsschritt und im zweiten tatsächlichen Abweichungsbetragserlangungsschritt erhaltenen Abweichungsbeträgen der Formänderung überschreitet.

4. Pressformungsanalyseverfahren nach Anspruch 3, wobei
der erste tatsächliche Abweichungsbetragserlangungsschritt einschließt
Erlangen, als den Abweichungsbetrag der Formänderung, einer Differenz zwischen: einem Rückfederungsbetrag eines vorbestimmten Abschnitts in der Form des standardmäßigen pressgeformten Teils; und einem Rückfederungsbetrag desselben Abschnitts, wie der vorbestimmte Abschnitt in der Form des standardmäßigen pressgeformten Teils, in der ersten Form des tatsächlichen pressgeformten Rohling-Teils, und
der zweite tatsächliche Abweichungsbetragserlangungsschritt einschließt
Erlangen, als den Abweichungsbetrag der Formänderung, einer Differenz zwischen: dem Rückfederungsbetrag des vorbestimmten Abschnitts in der Form des standardmäßigen pressgeformten Teils; und einem Rückfederungsbetrag desselben Abschnitts, wie der vorbestimmte Abschnitt in der Form des standardmäßigen pressgeformten Teils, in der zweiten Form des tatsächlichen pressgeformten Rohling-Teils.

5. Pressformungsanalyseeinrichtung zum Vorhersagen einer Wirkung von Formschwankungen eines Rohlings, wenn die Pressformung unter Verwendung des Rohlings durchgeführt wird, der aus einem die Formschwankungen aufweisenden Metallblech gewonnen wurde, die Pressformungsanalyseeinrichtung umfassend:
eine Formerlangungseinheit eines standardmäßigen pressgeformten Teils, wobei die Formerlangungseinheit zum Durchführen einer Pressformungsanalyse, wobei eine Pressformung mit einem vorbestimmten Werkzeug eines Pressformungsmodells unter Verwendung eines flachen Rohlingsmodells, das eine flache Form aufweist, durchgeführt wird, und zum Erlangen einer Form eines pressgeformten Teils nach der Stempelfreigabe als eine Form des standardmäßigen pressgeformten Teils konfiguriert ist;
eine Erzeugungseinheit eines Wellenform-Rohlingsmodells, wobei die Erzeugungseinheit zum Erzeugen eines Wellenform-Rohlingsmodells konfiguriert ist, das eine Wellenform aufweist, die eine vorbestimmte Wellenlänge und eine vorbestimmte Amplitude entsprechend den Formschwankungen aufweist;
eine Formerlangungseinheit eines unter Verwendung des Wellenform-Rohlingsmodells pressgeformten Teils, wobei die Formerlangungseinheit zum Durchführen einer Pressformungsanalyse, wobei eine Pressformung mit dem vorbestimmten Werkzeug des Pressformungsmodells unter Verwendung des Wellenform-Rohlingsmodells durchgeführt wird, und zum Erlangen einer Form des pressgeformten Teils nach der Stempelfreigabe als eine Form eines pressgeformten Wellenform-Rohling-Teils konfiguriert ist;
eine erste Abweichungsbetragserlangungseinheit, die zum Vergleichen der Form des standardmäßigen pressgeformten Teils und der Form des pressgeformten Wellenform-Rohling-Teils und Erhalten eines Abschnitts, in dem beide Formen voneinander abweichen, und eines Abweichungsbetrags einer Formänderung konfiguriert ist;
eine Erzeugungseinheit eines Zyklusabweichungs-Wellenform-Rohlingsmodells, wobei die Erzeugungseinheit zum Erzeugen eines oder mehrerer Typen von Zyklusabweichungs-Wellenform-Rohlingsmodellen konfiguriert ist, die jeweils eine Wellenform aufweisen, die eine Amplitude, die mit der Wellenform im Wellenform-Rohlingsmodell identisch ist, und einen Zyklus, der von dieser abweicht, aufweist;
eine Formerlangungseinheit eines unter Verwendung des Zyklusabweichungs-Wellenform-Rohlingsmodells pressgeformten Teils, wobei die Formerlangungseinheit zum Durchführen einer Pressformungsanalyse, wobei eine Pressformung mit dem vorbestimmten Werkzeug des Pressformungsmodells unter Verwendung des Zyklusabweichungs-Wellenform-Rohlingsmodells durchgeführt wird, und zum Erlangen einer Form des pressgeformten Teils nach der Stempelfreigabe als eine Form eines pressgeformten Zyklusabweichungs-Wellenform-Rohling-Teils konfiguriert ist;
eine zweite Abweichungsbetragserlangungseinheit, die zum Vergleichen der Form des standardmäßigen pressgeformten Teils mit einem oder mehreren Typen der Form des pressgeformten Zyklusabweichungs-Wellenform-Rohling-Teils und zum Erhalten eines Abschnitts, in dem beide Formen voneinander abweichen, und eines Abweichungsbetrags einer Formänderung konfiguriert ist; und
eine Einheit zum Identifizieren von Abschnitten, die Gegenmaßnahmen erfordern, wobei die Einheit zum Identifizieren eines Abschnitts konfiguriert ist, als einen Abschnitt, der Gegenmaßnahmen erfordert, der einen Abweichungsbetrag einer Formänderung aufweist, der einen Schwellenwert unter den in der ersten Abweichungsbetragserlangungseinheit und in der zweiten Abweichungsbetragserlangungseinheit erhaltenen Abweichungsbeträgen der Formänderung überschreitet.

6. Pressformungsanalyseeinrichtung nach Anspruch 5, wobei
die erste Abweichungsbetragserlangungseinheit konfiguriert ist zum
Erlangen, als den Abweichungsbetrag der Formänderung, einer Differenz zwischen: einem Rückfederungsbetrag eines vorbestimmten Abschnitts in der Form des standardmäßigen pressgeformten Teils; und einem Rückfederungsbetrag desselben Abschnitts, wie der vorbestimmte Abschnitt in der Form des standardmäßigen pressgeformten Teils, in der Form des pressgeformten Wellenform-Rohling-Teils, und
die zweite Abweichungsbetragserlangungseinheit konfiguriert ist zum
Erlangen, als den Abweichungsbetrag der Formänderung, einer Differenz zwischen: dem Rückfederungsbetrag des vorbestimmten Abschnitts in der Form des standardmäßigen pressgeformten Teils; und einem Rückfederungsbetrag desselben Abschnitts, wie der vorbestimmte Abschnitt in der Form des standardmäßigen pressgeformten Teils, in der Form des pressgeformten Zyklusabweichungs-Wellenform-Rohling-Teils.

7. Pressformungsanalyseeinrichtung zum Vorhersagen einer Wirkung von Formschwankungen eines Rohlings, wenn die Pressformung unter Verwendung des Rohlings durchgeführt wird, der aus einem die Formschwankungen aufweisenden Metallblech gewonnen wurde, die Pressformungsanalyseeinrichtung umfassend:
eine Formerlangungseinheit eines standardmäßigen pressgeformten Teils, wobei die Formerlangungseinheit zum Durchführen einer Pressformungsanalyse, wobei eine Pressformung mit einem vorbestimmten Werkzeug eines Pressformungsmodells unter Verwendung eines flachen Rohlingsmodells, das eine flache Form aufweist, durchgeführt wird, und zum Erlangen einer Form eines pressgeformten Teils nach der Stempelfreigabe als eine Form des standardmäßigen pressgeformten Teils konfiguriert ist;
eine erste Erzeugungseinheit eines tatsächlichen Rohlingsmodells, wobei die erste Erzeugungseinheit zum Messen einer Form eines ersten tatsächlichen Rohlings, der aus einer vorbestimmten Position des Metallblechs gewonnen wurde, und zum Erzeugen eines ersten tatsächlichen Rohlingsmodells auf der Grundlage eines Messergebnisses konfiguriert ist;
eine erste Formerlangungseinheit eines unter Verwendung des ersten tatsächlichen Rohlingsmodells pressgeformten Teils, wobei die Formerlangungseinheit zum Durchführen einer Pressformungsanalyse, wobei eine Pressformung mit dem vorbestimmten Werkzeug des Pressformungsmodells unter Verwendung des ersten tatsächlichen Rohlingsmodells durchgeführt wird, und zum Erlangen einer Form des pressgeformten Teils nach der Stempelfreigabe als eine erste Form eines tatsächlichen pressgeformten Rohling-Teils konfiguriert ist;
eine erste tatsächliche Abweichungsbetragserlangungseinheit, die zum Vergleichen der Form des standardmäßigen pressgeformten Teils und der ersten Form des tatsächlichen pressgeformten Rohling-Teils und zum Erhalten eines Abschnitts, in dem beide Formen voneinander abweichen, und eines Abweichungsbetrags einer Formänderung konfiguriert ist;
eine zweite Erzeugungseinheit eines zweiten tatsächlichen Rohlingsmodells, wobei die zweite Erzeugungseinheit zum Messen einer oder mehrerer Formen eines oder mehrerer zweiter tatsächlicher Rohlinge, die aus einer Position des Metallblechs gewonnen wurden, wobei sich diese Position von einer Position unterscheidet, aus der der erste tatsächliche Rohling gewonnen wird, und zum Erzeugen eines oder mehrerer Typen von zweiten tatsächlichen Rohlingsmodellen auf der Grundlage eines Messergebnisses konfiguriert ist;
eine zweite Formerlangungseinheit eines unter Verwendung eines tatsächlichen Rohlings pressgeformten Teils, wobei die Formerlangungseinheit zum Durchführen einer Pressformungsanalyse konfiguriert ist, wenn eine Pressformung mit dem vorbestimmten Werkzeug des Pressformungsmodells unter Verwendung des einen oder der mehreren Typen von zweiten tatsächlichen Rohlingsmodellen durchgeführt wird, wobei die Formerlangungseinheit zum Erlangen einer Form des pressgeformten Teils nach der Stempelfreigabe als eine Form des unter Verwendung des einen oder der mehreren zweiten tatsächlichen Rohlinge pressgeformten Teils konfiguriert ist;
eine zweite tatsächliche Abweichungsbetragserlangungseinheit, die zum Vergleichen der Form des standardmäßigen pressgeformten Teils mit einem oder mehreren Typen der zweiten Form des tatsächlichen pressgeformten Rohling-Teils und zum Erhalten eines Abschnitts, in dem beide Formen voneinander abweichen, und eines Abweichungsbetrags einer Formänderung konfiguriert ist; und
eine Einheit zum Identifizieren von Abschnitten, die Gegenmaßnahmen erfordern, wobei die Einheit zum Identifizieren eines Abschnitts konfiguriert ist, als einen Abschnitt, der Gegenmaßnahmen erfordert, der einen Abweichungsbetrag einer Formänderung aufweist, der einen Schwellenwert unter den in der ersten tatsächlichen Abweichungsbetragserlangungseinheit und in der zweiten tatsächlichen Abweichungsbetragserlangungseinheit erhaltenen Abweichungsbeträgen der Formänderung überschreitet.

8. Pressformungsanalyseeinrichtung nach Anspruch 7, wobei
die erste tatsächliche Abweichungsbetragserlangungseinheit konfiguriert ist zum
Erlangen, als den Abweichungsbetrag der Formänderung, einer Differenz zwischen: einem Rückfederungsbetrag eines vorbestimmten Abschnitts in der Form des standardmäßigen pressgeformten Teils; und einem Rückfederungsbetrag desselben Abschnitts, wie der vorbestimmte Abschnitt in der Form des standardmäßigen pressgeformten Teils, in der ersten Form des tatsächlichen pressgeformten Rohling-Teils, und
die zweite tatsächliche Abweichungsbetragserlangungseinheit konfiguriert ist zum
Erlangen, als den Abweichungsbetrag der Formänderung, einer Differenz zwischen: dem Rückfederungsbetrag des vorbestimmten Abschnitts in der Form des standardmäßigen pressgeformten Teils; und einem Rückfederungsbetrag desselben Abschnitts, wie der vorbestimmte Abschnitt in der Form des standardmäßigen pressgeformten Teils, in der zweiten Form des tatsächlichen pressgeformten Rohling-Teils.

9. Pressformungsanalyseprogramm, das einen Computer dazu veranlasst, als die Pressformungsanalyseeinrichtung nach einem der Ansprüche 5 bis 8 zu fungieren.

## Revendications

1. Procédé d'analyse de formage à la presse mis en œuvre par ordinateur de prédiction d'un effet de variation de forme d'une ébauche lorsqu'un formage à la presse est réalisé en utilisant l'ébauche recueillie à partir d'une feuille de métal présentant une variation de forme, le procédé d'analyse de formage à la presse comprenant :
une étape d'acquisition de forme d'une pièce formée à la presse standard consistant à réaliser une analyse de formage à la presse où le formage à la presse est réalisé avec un outil prédéterminé de modèle de formage à la presse en utilisant un modèle d'ébauche plate qui présente une forme plate, et à acquérir une forme d'une pièce formée à la presse après libération de la matrice en tant qu'une forme de la pièce formée à la presse standard ;
une étape de génération d'un modèle d'ébauche en forme d'onde consistant à générer un modèle d'ébauche en forme d'onde présentant une forme d'onde qui présente une longueur d'onde prédéterminée et une amplitude prédéterminée correspondant à la variation de forme ;
une étape d'acquisition de forme d'une pièce formée à la presse en utilisant le modèle d'ébauche en forme d'onde consistant à réaliser une analyse de formage à la presse où le formage à la presse est réalisé avec l'outil prédéterminé de modèle de formage à la presse en utilisant le modèle d'ébauche en forme d'onde, et à acquérir une forme de la pièce formée à la presse après libération de la matrice en tant qu'une forme d'une pièce formée à la presse d'ébauche en forme d'onde ;
une première étape d'acquisition de quantité d'écart consistant à comparer la forme de la pièce formée à la presse standard et la forme de la pièce formée à la presse d'ébauche en forme d'onde, et à obtenir une partie où les deux formes s'écartent l'une de l'autre et une quantité d'écart de changement de forme ;
une étape de génération d'un modèle d'ébauche en forme d'onde d'écart de cycle consistant à générer un ou plusieurs types de modèles d'ébauche en forme d'onde d'écart de cycle chacun présentant une forme d'onde qui présente une amplitude identique à et un cycle qui s'écarte par rapport à la forme d'onde dans le modèle d'ébauche en forme d'onde ;
une étape d'acquisition de forme d'une pièce formée à la presse en utilisant le modèle d'ébauche en forme d'onde d'écart de cycle consistant à réaliser une analyse de formage à la presse où le formage à la presse est réalisé avec l'outil prédéterminé de modèle de formage à la presse en utilisant le modèle d'ébauche en forme d'onde d'écart de cycle, et à acquérir une forme de la pièce formée à la presse après libération de la matrice en tant qu'une forme d'une pièce formée à la presse d'ébauche en forme d'onde d'écart de cycle ;
une seconde étape d'acquisition de quantité d'écart consistant à comparer la forme de la pièce formée à la presse standard et un ou plusieurs types de la forme de la pièce formée à la presse d'ébauche en forme d'onde d'écart de cycle, et à obtenir une partie où les deux formes s'écartent l'une de l'autre et une quantité d'écart de changement de forme ; et
une étape d'identification des parties nécessitant une partie de contremesures présentant une quantité d'écart de changement de forme excédant un seuil parmi les quantités d'écart de changement de forme obtenues au cours de la première étape d'acquisition de quantité d'écart et de la seconde étape d'acquisition de quantité d'écart.

2. Procédé d'analyse de formage à la presse selon la revendication 1, dans lequel
la première étape d'acquisition de quantité d'écart inclut
l'acquisition, en tant que la quantité d'écart de changement de forme, d'une différence entre : une quantité de retour d'élastique d'une partie prédéterminée dans la forme de la pièce formée à la presse standard ; et une quantité de retour d'élastique de la même partie dans la forme de la pièce formée à la presse d'ébauche en forme d'onde en tant que la partie prédéterminée dans la forme de la pièce formée à la presse standard, et
la seconde étape d'acquisition de quantité d'écart inclut
l'acquisition, en tant que la quantité d'écart de changement de forme, d'une différence entre : la quantité de retour d'élastique de la partie prédéterminée dans la forme de la pièce formée à la presse standard ; et une quantité de retour d'élastique de la même partie dans la forme de la pièce formée à la presse d'ébauche en forme d'onde d'écart de cycle en tant que la partie prédéterminée dans la forme de la pièce formée à la presse standard.

3. Procédé d'analyse de formage à la presse mis en œuvre par ordinateur de prédiction d'un effet de variation de forme d'une ébauche lorsqu'un formage à la presse est réalisé en utilisant l'ébauche recueillie à partir d'une feuille de métal présentant une variation de forme, le procédé d'analyse de formage à la presse comprenant :
une étape d'acquisition de forme d'une pièce formée à la presse standard consistant à réaliser une analyse de formage à la presse où le formage à la presse est réalisé avec un outil prédéterminé de modèle de formage à la presse en utilisant un modèle d'ébauche plate qui présente une forme plate, et à acquérir une forme d'une pièce formée à la presse après libération de la matrice en tant qu'une forme de la pièce formée à la presse standard ;
une première étape de génération d'un premier modèle d'ébauche réelle consistant à générer le premier modèle d'ébauche réelle sur la base d'un résultat de mesure obtenu en mesurant une forme d'une première ébauche réelle recueillie à partir d'une position prédéterminée de la feuille de métal ;
une première étape d'acquisition de forme d'une pièce formée à la presse en utilisant le premier modèle d'ébauche réelle consistant à réaliser une analyse de formage à la presse où le formage à la presse est réalisé avec l'outil prédéterminé de modèle de formage à la presse en utilisant le premier modèle d'ébauche réelle, et à acquérir une forme de la pièce formée à la presse après libération de la matrice en tant qu'une première forme d'une pièce formée à la presse d'ébauche réelle ;
une première étape d'acquisition de quantité d'écart réelle consistant à comparer la forme de la pièce formée à la presse standard et la première forme de la pièce formée à la presse d'ébauche réelle, et à obtenir une partie où les deux formes s'écartent l'une de l'autre et une quantité d'écart de changement de forme ;
une seconde étape de génération d'un second modèle d'ébauche réelle consistant à générer un ou plusieurs types de seconds modèles d'ébauche réelle sur la base d'un résultat de mesure obtenu en mesurant une forme ou des formes d'une ou de plusieurs secondes ébauches réelles recueillies à partir d'une position de la feuille de métal, la position étant différente d'une position à partir de laquelle la première ébauche réelle est recueillie ;
une seconde étape d'acquisition de forme d'une pièce formée à la presse en utilisant le un ou les plusieurs types de seconds modèles d'ébauche réelle consistant à réaliser une analyse de formage à la presse où le formage à la presse est réalisé avec l'outil prédéterminé de modèle de formage à la presse en utilisant le un ou les plusieurs types de seconds modèles d'ébauche réelle, et à acquérir une forme de la pièce formée à la presse après libération de la matrice en tant qu'une seconde forme d'une pièce formée à la presse d'ébauche réelle ;
une seconde étape d'acquisition de quantité d'écart réelle consistant à comparer la forme de la pièce formée à la presse standard et un ou plusieurs types de la seconde forme de la pièce formée à la presse d'ébauche réelle, et à obtenir une partie où les deux formes s'écartent l'une de l'autre et une quantité d'écart de changement de forme ; et
une étape d'identification des parties nécessitant des contremesures d'identification, en tant qu'une partie nécessitant des contremesures, une partie présentant une quantité d'écart de changement de forme excédant un seuil parmi les quantités d'écart de changement de forme obtenues au cours de la première étape d'acquisition de quantité d'écart réelle et de la seconde étape d'acquisition de quantité d'écart réelle.

4. Procédé d'analyse de formage à la presse selon la revendication 3, dans lequel
la première étape d'acquisition de quantité d'écart réelle inclut
l'acquisition, en tant que la quantité d'écart de changement de forme, d'une différence entre : une quantité de retour d'élastique d'une partie prédéterminée dans la forme de la pièce formée à la presse standard ; et une quantité de retour d'élastique de la même partie dans la première forme de la pièce formée à la presse d'ébauche réelle en tant que la partie prédéterminée dans la forme de la pièce formée à la presse standard, et
la seconde étape d'acquisition de quantité d'écart réelle inclut
l'acquisition, en tant que la quantité d'écart de changement de forme, d'une différence entre : la quantité de retour d'élastique de la partie prédéterminée dans la forme de la pièce formée à la presse standard ; et une quantité de retour d'élastique de la même partie dans la seconde forme de la pièce formée à la presse d'ébauche réelle en tant que la partie prédéterminée dans la forme de la pièce formée à la presse standard.

5. Appareil d'analyse de formage à la presse de prédiction d'un effet de variation de forme d'une ébauche lorsqu'un formage à la presse est réalisé en utilisant l'ébauche recueillie à partir d'une feuille de métal présentant une variation de forme, l'appareil d'analyse de formage à la presse comprenant :
une unité d'acquisition de forme d'une pièce formée à la presse standard, l'unité d'acquisition de forme étant configurée pour réaliser une analyse de formage à la presse où le formage à la presse est réalisé avec un outil prédéterminé de modèle de formage à la presse en utilisant un modèle d'ébauche plate qui présente une forme plate, et acquérir une forme d'une pièce formée à la presse après libération de la matrice en tant qu'une forme de la pièce formée à la presse standard ;
une unité de génération d'un modèle d'ébauche en forme d'onde, l'unité de génération étant configurée pour générer un modèle d'ébauche en forme d'onde présentant une forme d'onde qui présente une longueur d'onde prédéterminée et une amplitude prédéterminée correspondant à la variation de forme ;
une unité d'acquisition de forme d'une pièce formée à la presse en utilisant le modèle d'ébauche en forme d'onde, l'unité d'acquisition de forme étant configurée pour réaliser une analyse de formage à la presse où le formage à la presse est réalisé avec l'outil prédéterminé de modèle de formage à la presse en utilisant le modèle d'ébauche en forme d'onde, et acquérir une forme de la pièce formée à la presse après libération de la matrice en tant qu'une forme d'une pièce formée à la presse d'ébauche en forme d'onde ;
une première unité d'acquisition de quantité d'écart étant configurée pour comparer la forme de la pièce formée à la presse standard et la forme de la pièce formée à la presse d'ébauche en forme d'onde, et obtenir une partie où les deux formes s'écartent l'une de l'autre et une quantité d'écart de changement de forme ;
une unité de génération d'un modèle d'ébauche en forme d'onde d'écart de cycle, l'unité de génération étant configurée pour générer un ou plusieurs types de modèles d'ébauche en forme d'onde d'écart de cycle chacun présentant une forme d'onde qui présente une amplitude identique à et un cycle qui s'écarte par rapport à la forme d'onde dans le modèle d'ébauche en forme d'onde ;
une unité d'acquisition de forme d'une pièce formée à la presse en utilisant le modèle d'ébauche en forme d'onde d'écart de cycle, l'unité d'acquisition de forme étant configurée pour réaliser une analyse de formage à la presse où le formage à la presse est réalisé avec l'outil prédéterminé de modèle de formage à la presse en utilisant le modèle d'ébauche en forme d'onde d'écart de cycle, et acquérir une forme de la pièce formée à la presse après libération de la matrice en tant qu'une forme d'une pièce formée à la presse d'ébauche en forme d'onde d'écart de cycle ;
une seconde unité d'acquisition de quantité d'écart étant configurée pour comparer la forme de la pièce formée à la presse standard et un ou plusieurs types de la forme de la pièce formée à la presse d'ébauche en forme d'onde d'écart de cycle, et obtenir une partie où les deux formes s'écartent l'une de l'autre et une quantité d'écart de changement de forme ; et
une unité d'identification des parties nécessitant des contremesures, l'unité étant configurée pour identifier, en tant qu'une partie nécessitant des contremesures, une partie présentant une quantité d'écart de changement de forme excédant un seuil parmi les quantités d'écart de changement de forme obtenues dans la première unité d'acquisition de quantité d'écart et la seconde unité d'acquisition de quantité d'écart.

6. Appareil d'analyse de formage à la presse selon la revendication 5, dans lequel
la première unité d'acquisition de quantité d'écart est configurée pour
acquérir, en tant que la quantité d'écart de changement de forme, une différence entre : une quantité de retour d'élastique d'une partie prédéterminée dans la forme de la pièce formée à la presse standard ; et une quantité de retour d'élastique de la même partie dans la forme de la pièce formée à la presse d'ébauche en forme d'onde en tant que la partie prédéterminée dans la forme de la pièce formée à la presse standard, et
la seconde unité d'acquisition de quantité d'écart est configurée pour
acquérir, en tant que la quantité d'écart de changement de forme, une différence entre : la quantité de retour d'élastique de la partie prédéterminée dans la forme de la pièce formée à la presse standard ; et une quantité de retour d'élastique de la même partie dans la forme de la pièce formée à la presse d'ébauche en forme d'onde d'écart de cycle en tant que la partie prédéterminée dans la forme de la pièce formée à la presse standard.

7. Appareil d'analyse de formage à la presse de prédiction d'un effet de variation de forme d'une ébauche lorsqu'un formage à la presse est réalisé en utilisant l'ébauche recueillie à partir d'une feuille de métal présentant une variation de forme, l'appareil d'analyse de formage à la presse comprenant :
une unité d'acquisition de forme d'une pièce formée à la presse standard, l'unité d'acquisition de forme étant configurée pour réaliser une analyse de formage à la presse où le formage à la presse est réalisé avec un outil prédéterminé de modèle de formage à la presse en utilisant un modèle d'ébauche plate qui présente une forme plate, et acquérir une forme d'une pièce formée à la presse après libération de la matrice en tant qu'une forme de la pièce formée à la presse standard ;
une première unité de génération d'un modèle d'ébauche réelle, la première unité de génération étant configurée pour mesurer une forme d'une première ébauche réelle recueillie à partir d'une position prédéterminée de la feuille de métal, et générer un premier modèle d'ébauche réelle sur la base d'un résultat de mesure ;
une première unité d'acquisition de forme d'une pièce formée à la presse en utilisant le premier modèle d'ébauche réelle, l'unité d'acquisition de forme étant configurée pour réaliser une analyse de formage à la presse où le formage à la presse est réalisé avec l'outil prédéterminé de modèle de formage à la presse en utilisant le premier modèle d'ébauche réelle, et acquérir une forme de la pièce formée à la presse après libération de la matrice en tant qu'une première forme d'une pièce formée à la presse d'ébauche réelle ;
une première unité d'acquisition de quantité d'écart réelle configurée pour comparer la forme de la pièce formée à la presse standard et la première forme de la pièce formée à la presse d'ébauche réelle, et obtenir une partie où les deux formes s'écartent l'une de l'autre et une quantité d'écart de changement de forme ;
une seconde unité de génération d'un modèle d'ébauche réelle, la seconde unité de génération étant configurée pour mesurer une forme ou des formes d'une ou de plusieurs secondes ébauches réelles recueillies à partir d'une position de la feuille de métal, la position étant différente d'une position à partir de laquelle la première ébauche réelle est recueillie, et générer un ou plusieurs types de seconds modèles d'ébauche réelle sur la base d'un résultat de mesure ;
une seconde unité d'acquisition de forme d'une pièce formée à la presse en utilisant une ébauche réelle, l'unité d'acquisition de forme étant configurée pour réaliser une analyse de formage à la presse lorsque le formage à la presse est réalisé avec l'outil prédéterminé de modèle de formage à la presse en utilisant le un ou les plusieurs types de seconds modèles d'ébauche réelle,
l'unité d'acquisition de forme étant configurée pour acquérir une forme de la pièce formée à la presse après libération de la matrice en tant qu'une forme de la pièce formée à la presse en utilisant la une ou les plusieurs secondes ébauches réelles ;
une seconde unité d'acquisition de quantité d'écart réelle configurée pour comparer la forme de la pièce formée à la presse standard et un ou plusieurs types de la seconde forme de la pièce formée à la presse d'ébauche réelle, et obtenir une partie où les deux formes s'écartent l'une de l'autre et une quantité d'écart de changement de forme ; et
une unité d'identification des parties nécessitant des contremesures, l'unité étant configurée pour identifier, en tant qu'une partie nécessitant des contremesures, une partie présentant une quantité d'écart de changement de forme excédant un seuil parmi les quantités d'écart de changement de forme obtenues dans la première unité d'acquisition de quantité d'écart réelle et la seconde unité d'acquisition de quantité d'écart réelle.

8. Appareil d'analyse de formage à la presse selon la revendication 7, dans lequel
la première unité d'acquisition de quantité d'écart réelle est configurée pour
acquérir, en tant que la quantité d'écart de changement de forme, une différence entre : une quantité de retour d'élastique d'une partie prédéterminée dans la forme de la pièce formée à la presse standard ; et une quantité de retour d'élastique de la même partie dans la première forme de la pièce formée à la presse d'ébauche réelle en tant que la partie prédéterminée dans la forme de la pièce formée à la presse standard, et
la seconde unité d'acquisition de quantité d'écart réelle est configurée pour
acquérir, en tant que la quantité d'écart de changement de forme, une différence entre : la quantité de retour d'élastique de la partie prédéterminée dans la forme de la pièce formée à la presse standard ; et une quantité de retour d'élastique de la même partie dans la seconde forme de la pièce formée à la presse d'ébauche réelle en tant que la partie prédéterminée dans la forme de la pièce formée à la presse standard.

9. Programme d'analyse de formage à la presse amenant un ordinateur à fonctionner en tant que l'appareil d'analyse de formage à la presse selon l'une quelconque des revendications 5 à 8.
